# EUROPÄISCHE PATENTSCHRIFT

(11) **EP 1 373 870 B1**
(45) Veröffentlichungstag und Bekanntmachung des Hinweises auf die Patenterteilung: **11.07.2007**
(21) Anmeldenummer: 02716839.2
(22) Anmeldetag: 20.03.2002
(51) Int. Cl.: G01N 21/64

(54) **VORRICHTUNG ZUR REFERENZIERUNG VON FLUORESZENZSIGNALEN**
DEVICE FOR REFERENCING FLUORESCENCE SIGNALS
DISPOSITIF POUR REFERENCER DES SIGNAUX DE FLUORESCENCE

(30) Priorität: 28.03.2001 DE 10115752; 11.01.2002 DE 10200865
(43) Veröffentlichungstag der Anmeldung: 02.01.2004
(73) Patentinhaber: Clondiag Chip Technologies GmbH, 07743 Jena (DE)
(72) Erfinder: ERMANTRAUT, Eugen, 07745 Jena (DE); KAISER, Thomas, 07751 Bucha (DE); TUCHSCHEERER, Jens, 07743 Jena (DE)
(74) Vertreter: Neuefeind, Regina
(86) Internationale Anmeldenummer: PCT/EP2002/003140
(87) Internationale Veröffentlichungsnummer: WO 2002/077620

(56) Entgegenhaltungen:
- WO-A-01/06227
- WO-A-98/49537
- US-A- 5 414 258
- US-A- 5 838 435

## Beschreibung

Die Erfindung betrifft eine Vorrichtung, die den Vergleich der Abbildungseigenschaften und Signalempfindlichkeit von Fluoreszenzdetektionssystemen und die testspezifische Referenzierung von Fluoreszenzsignalen ermöglicht, sowie Verfahren zu ihrer Herstellung.

Biomedizinische Tests basieren häufig auf dem Nachweis einer Wechselwirkung zwischen einem Molekül bzw. einer Affinitätsmatrix, dessen Identität bzw. deren Beschaffenheit bekannt ist (Sonde), und einem nachzuweisenden, unbekannten Molekül bzw. nachzuweisenden, unbekannten Molekülen (Ziel- bzw. Targetmolekül oder Target).
Bei modernen Tests sind die Sonden, so es sich bei ihnen um Moleküle handelt, häufig in Form einer Substanzbibliothek in bekannter Menge und Position auf Trägern immobilisiert. Solche Vorrichtungen werden auch Sonden-Arrays oder Chips genannt. Ein Sonden-Array umfasst charakteristischerweise mehrere so genannte Array-Elemente, bei denen es sich um die Bereiche eines Sonden-Arrays handelt, in denen eine bestimmte Molekularsonde häufig in mehrfacher Kopie immobilisiert ist. Die Summe aller belegten Array-Elemente bildet damit das Sonden-Array.

Die Immobilisierung von molekularen Sonden in Form einer Substanzbibliothek auf Sonden-Arrays ermöglicht es, eine Probe, die die nachzuweisenden Target-Moleküle enthält, parallel an mehreren Sonden gleichzeitig zu analysieren, was eine systematische Analyse mit hohem Durchsatz bei geringem Zeitaufwand ermöglicht (high throughput screening, D.J. Lockhart, E.A. Winzeler, Genomics, Gene Expression and DNA Arrays, Nature 2000, 405, 827-836). Für die Herstellung der Sonden-Arrays werden die Sonden üblicherweise in vorgegebener Art und Weise auf einer geeigneten, beispielsweise in WO 00/12575 beschriebenen Matrix immobilisiert (siehe z.B. US 5,412,087, WO 98/36827) bzw. synthetisch erzeugt (siehe z.B. US 5,143,854).

Der Nachweis einer Wechselwirkung zwischen der Sonde und dem Targetmolekül erfolgt prinzipiell folgendermaßen:

Die Sonde bzw. die Sonden werden in vorgegebener Art und Weise an einer bestimmten Matrix in Form eines Sonden-Arrays fixiert. Die Targets werden dann in einer Lösung mit den Sonden in Kontakt gebracht und unter definierten Bedingungen inkubiert. Weisen die Sonde und das Targetmolekül aufgrund von komplementären Eigenschaften eine Affinität zueinander auf, so findet während der Inkubation zwischen der Sonde und dem Target eine spezifische Wechselwirkung statt. Die dabei auftretende Bindung ist deutlich stabiler als die Bindung von Targetmolekülen an Sonden, die für das Targetmolekül nicht spezifisch sind. Zum Entfernen von unspezifisch gebundenen Targetmolekülen wird das System mit entsprechenden Lösungen gewaschen oder erwärmt bzw. entsprechend restriktiv wirkenden Maßnahmen unterworfen.

Der Nachweis der spezifischen Wechselwirkung zwischen einem Target und seiner Sonde kann dann durch eine Vielzahl von Verfahren erfolgen, die in der Regel von der Art des Markers abhängen, der je nach Aufbau des Experiments vor, während oder nach der Wechselwirkung des Targetmoleküls mit dem Sonden-Array in die Targetmoleküle oder in die Sondenmoleküle eingebracht worden ist. Bei solchen Markern kann es sich z.B. um fluoreszierende Gruppen, um radioaktive Markierungen, um Enzyme oder chemolumineszierende Moleküle handeln, wobei die zu verwendende Nachweismethode sich nach der Art des Markers richtet (A. Marshall, J. Hodgson, DNA Chips: An Array of Possibilities, Nature Biotechnology 1998, 16, 27-31; G. Ramsay, DNA Chips: State of the Art, Nature Biotechnology 1998, 16, 40-44).

Abhängig von der auf dem Sonden-Array immobilisierten Substanzbibliothek und der chemischen Natur der Targetmoleküle können anhand dieses Testprinzips Wechselwirkungen zwischen Nukleinsäuren und Nukleinsäuren, zwischen Proteinen und Proteinen sowie zwischen Nukleinsäuren und Proteinen untersucht werden (zur Übersicht siehe F. Lottspeich, H. Zorbas, 1998, Bioanalytik, Spektrum Akademischer Verlag, Heidelberg/Berlin).

Als Substanzbibliotheken, die auf Sonden-Arrays oder Chips immobilisiert werden können, kommen dabei Antikörper-Bibliotheken, Rezeptor-Bibliotheken, PeptidBibliotheken und Nukleinsäure-Bibliotheken in Frage. Die Nukleinsäure-Bibliotheken nehmen die mit Abstand wichtigste Rolle ein, wobei es sich besonders häufig um DNA-Molekül- oder RNA-Molekül-Bibliotheken handelt. Die Sonden-Array basierte Analyse von Nukleinsäure-Nukleinsäure-Wechselwirkungen folgt dabei den Prinzipien der Nukleinsäure-Hybridisierungstechnik (A. A. Leitch, T. Schwarzacher, D. Jackson, I. J. Leitch, 1994, In vitro-Hybridisierung, Spektrum Akademischer Verlag, Heidelberg/Berlin/Oxford).

Üblicherweise erfolgt der Nachweis spezifischer Wechselwirkungen zwischen einer Sonde und einem Target durch fluoreszenzoptische Auswertung, da diese sich durch eine hohe Empfindlichkeit, durch Vielseitigkeit hinsichtlich der verwendbaren Marker und durch die Möglichkeit zur orts- und zeitaufgelösten Detektion der Wechselwirkung mit vergleichsweise geringem Aufwand (vor allem im Vergleich zu massenspektroskopischen Verfahren) sowie durch die Eliminierung der Strahlenbelastung, wie sie bei der Verwendung von radioaktiven Markierungsreagenzien auftritt, auszeichnen. Zusätzlich kann abhängig von den zur Markierung verwendeten Fluorophoren der Anregungs- und Detektionswellenlängenbereich eingestellt werden.

Allerdings werden qualitative und quantitative fluoreszenzoptische Auswertungen in der Praxis durch eine Reihe von Faktoren negativ beeinflusst, die in der Fluoreszenzspektroskopie an sich, in der Art der gewählten Fluoreszenzmarker und in der Art und dem Aufbau der verwendeten Detektionssysteme begründet sind. Zu diesen Faktoren zählen vor allem unspezifische Hintergrundsignale (Signalrauschen), die durch intrinsische optische Eigenschaften der Fluoreszenzmarker (z.B. Bleichen, Quenching bzw. Fluoreszenzlöschung der verwendeten Farbstoffe), durch die physikalisch-chemischen Eigenschaften der Sonde bzw. Targets und deren Lösungen (z.B. Autofluoreszenz), durch Schwankungen im optischen System (z.B. Strahlungsintensität der Lichtquelle und Fremdlicht) und durch Aufbau und Art der verwendeten Detektionssysteme (z.B. Autofluoreszenz der Assemblierungselemente, Fähigkeit der Detektoren zur räumlichen und zeitlichen Auflösung, Streuungen, Reflexionen) zustande kommen.

Zur Beurteilung, ob eine gemessene Fluoreszenzintensität ein Signal darstellt oder lediglich zum Signalrauschen gehört, müssen daher die Störeinflüsse beseitigt bzw. minimiert werden und Vorrichtungen und Methoden eingesetzt werden, die eine Referenzierung der gemessenen Fluoreszenzsignale erlauben. Solche Vorrichtungen werden auch als Fluoreszenzeichstandard bezeichnet.

Aus dem Bemühen, das gerätebedingte Signalrauschen zu minimieren, resultiert der hohe technische Aufwand zum Aufbau hochsensitiver Detektoren, die eine qualitative und quantitative Auswertung von Fluoreszenzsignalen erlauben. Insbesondere für die Auswertung beim high throughput screening von Sonden-Arrays, das eines gewissen Automatisierungsgrads bedarf, sind speziell angepasste Detektionssysteme erforderlich.

Beim fluoreszenzoptischen Auslesen von molekularen Sonden-Arrays mittels Standardepifluoreszenzaufbauten werden z.B. CCD (Charge Coupled Device) basierte Detektoren verwendet, die zur qualitativen Unterscheidung von optischen Effekten (Streuung, Reflexion) die Anregung der Fluorophore im Dunkelfeld (durch Auflicht oder Durchlichtmikroskopie) realisieren (C.E. Hooper et al., Quantitive Photone Imaging in the Life Sciences using intensified CCD Cameras, Journal of Bioluminescence and Chemiluminescence 1990, 337-344). Die Abbildung der Sonden-Arrays erfolgt dabei entweder in einer Belichtung oder durch Rastern unter Verwendung hochauflösender Optiken. Um auftretende Autofluoreszenz oder systembedingte optische Effekte wie die Beleuchtungshomogenität über den gesamten Sonden-Array zu minimieren bzw. zu gewähren, sind komplizierte Beleuchtungsoptiken und Filtersysteme notwendig.

Konfokale Scanning-Systeme (beschrieben in US 5,304,810) erlauben die Auswertung von Fluoreszenzsignalen aus ausgewählten Ebenen einer Probe. Sie beruhen auf der Selektion der Fluoreszenzsignale entlang der optischen Achse mittels Lochblenden, woraus sich ein hoher Justageaufwand für die Proben sowie die Etablierung eines leistungsfähigen Autofokussystems ergibt. Solche Systeme sind in der technischen Lösung hochkomplex und die erforderlichen Komponenten, zu denen Laser, Lochblenden, (gekühlte) Detektoren (z.B. PMT, Avalanche-Dioden, CCD-Systeme), hochgenaue mechanische Translationselemente und Optiken gehören, müssen mit erheblichem Aufwand integriert und aufeinander optimiert werden (beschrieben in US 5,459,325, US 5,192,980, US 5,834,758).

Es sind also Detektionssysteme bekannt, mit denen die molekulare Wechselwirkung eines mit einem Fluoreszenzmarker versehenen Targets und einer spezifischen Sonde, wie sie z. B bei Sonden-Array basierten Experimenten auftritt, nachgewiesen werden kann. Trotz des beschriebenen hohen technischen Aufwands, der je nach Art und Aufbau des verwendeten Detektionssystems für die Minimierung des Signalrauschens betrieben wird, kann dies nicht gänzlich beseitigt werden. Daher ist für die qualitative und quantitative Auswertung von gemessenen Fluoreszenzsignalen nach wie vor eine Referenzierung oder Kalibrierung der Experimente und der Detektionsgeräte mittels Fluoreszenzeichstandards notwendig. Eine Kalibrierung von Detektionssystemen mittels Fluoreszenzeichstandards wird durchgeführt, um u.a. Aussagen hinsichtlich der Sensitivität des räumlichen und zeitlichen Auflösungsvermögens und der geometrischen Bildfehler, wie z.B. der Bildfeldwölbung des jeweiligen Systems vornehmen zu können.

Die Kalibrierung von Detektionsgeräten hinsichtlich ihres zeitlichen Auflösungsvermögens ist notwendig, da zu Unterscheidung des eigentlichen (häufig langlebigen) Fluoreszenzsignals von (häufig kurzlebigen) Autofluoreszenzsignalen die Messung der Signale über einen längeren Zeitraum durchgeführt werden muss.

Bei der Verwendung von CCD-Detektoren müssen mit Hilfe von Standards z.B. die Linearität und Sensitivität des Detektors im verwendeten Fluoreszenzwellenlängenbereich, das räumliche und zeitliche Auflösungsvermögen sowie die Bildfeldwölbung (Flatfieldbestimmung) des Detektors bestimmt werden. Konfokale Detektionssysteme müssen hinsichtlich der Bereiche, die angeregt bzw. zur Gesamtintensität beitragen, kalibriert werden.

Eine Kalibrierung von Experimenten mittels Fluoreszenzeichstandards ist notwendig, da die als Marker verwendeten Fluorophore hinsichtlich ihrer Fluoreszenzausbeuten aufgrund der Umgebungsbedingungen, denen sie ausgesetzt sind (z.B. Autofluoreszenz von Lösungskomponenten, pH-Wert, Temperatur, Bestrahlungszeit), beträchtlichen Schwankungen unterworfen sind und die absolute Quantifizierung von z.B. Hybridisierungsausbeuten auf Sonden-Arrays damit nur bedingt möglich ist.

Das Kalibrieren von verschiedenen Fluoreszenzdetektionssystemen mittels Fluoreszenzeichstandards ist auch deswegen sehr wichtig, da nur eine solche Kalibrierung einen Vergleich von Fluoreszenzsignalen von Experimenten, die mit unterschiedlichen Detektionssystemen aber auch Geräten eines Systems gemessen wurden, erlaubt (system- oder geräteübergreifender Vergleich).

Im Stand der Technik sind unterschiedliche Lehren bekannt, die eine Kalibrierung von Fluoreszenzdetektionssystemen bzw. Fluoreszenzsignalen ermöglichen sollen.

Zur Kalibrierung von Fluroeszenzdetektionsgeräten können z.B. Chips, die aus einer fluoreszierenden Plastikschicht bestehen, verwendet werden. Diese Eichstandards haben den Nachteil, dass sie keine Kalibrierung der Detektionssysteme hinsichtlich deren räumlichen Auflösungsvermögens oder hinsichtlich deren dynamischen Eigenschaften über einen weiten Fluoreszenzbereich erlauben. Auch eine Bestimmung der Bildfeldwölbung von z.B. CCD-Detektoren ist mit diesen Standards nicht möglich, da aufgrund der Dicke des Chips eine Homogenisierung des Fluoreszenzsignals durch den Chip stattfindet. Damit ist eine Kalibrierung des Einflusses der geometrischen Verhältnisse auf die Detektion von Fluoreszenzsignalen, der insbesondere bei unterschiedlichen Detektionssystemen und Prinzipien eine entscheidende Rolle haben kann, weder geräte- noch systemübergreifend einstellbar.

Bei der Verwendung von CCD-basierten Fluoreszenzdetektoren und insbesondere bei der Anregung durch aufgeweitete oder strahlgeformte Laser oder multispektrale Beleuchtungssysteme wie z.B. Kaltlichtquellen sind zum Abgleich der Beleuchtungshomogenität bei der Verwendung von z.B. bewegten Streuscheiben aufwändige Berechnungen und Bildmanipulationen zur Definition des Flatfields nötig. Fluoreszenzeichstandards, die eine Definition des Flatfields zur Korrektur der Beleuchtungshomogenität bei solchen direkt abbildenden Systemen ermöglichen, sind aus dem Stand der Technik nicht bekannt.

Weiterhin gibt es Fluoreszenzeichstandards, die auf der Basis von dotierten Gläsern beruhen. Auch diese Standards haben den Nachteil, dass sie keine Kalibrierung der Detektionssysteme hinsichtlich deren räumlichen Auflösungsvermögens bzw. hinsichtlich deren geometrischen Eigenschaften erlauben, da wegen der Dimensionen solcher Standards eine Homogenisierung der Signale durch das Volumen der Glases stattfindet. Konfokale Systeme, bei denen nur bestimmte Bereiche und Schichten entlang der optischen Achse angeregt werden bzw. zur Gesamtintensität beitragen und das Problem von Transmissionsverlusten durch darüberliegende Strukturschichten besteht, können mit solchen Standards ebenfalls nicht hinsichtlich ihrer geometrischen Eigenschaften kalibriert werden.

In WO 01/06227 ist die Herstellung eines Fluoreszenzeichstandards auf der Basis von Mikro- bzw. Nanopartikeln und deren Anwendung zur Kalibrierung sowohl von Fluoreszenzdetektionssystemen als auch zur Referenzierung von Fluoreszenzintensitätssignalen in fluorometrischen Assays beschrieben. Diese Standards eignen sich ebenfalls nicht zur Kalibrierung der Fluoreszenzdetektionssysteme hinsichtlich deren räumlichen Auflösungsvermögens. Damit ist ein geräteübergreifender Vergleich von aus Sonden-Array basierten Experimenten gewonnenen Signalintensitätsdaten nur bedingt möglich.

Um die kurzlebige Untergrundfluoreszenz (z.B. von autofluoreszierenden Lösungsmittelmolekülen) von dem eigentlichen Fluoreszenzsignal zu unterscheiden und das eigentliche Signal referenzieren zu können, können langlebig emittierende Markerstoffe als Standard verwendet werden, deren Signal durch zeitaufgelöste Detektionsmethoden nachgewiesen wird. Dabei handelt es sich häufig um phosphoreszierende Chelate der Seltenerdmetalle (insbesondere die des Europium oder Terpium). Diese Stoffe besitzen aber den Nachteil, dass sie nur mit UV-Lichtquellen angeregt werden können. Darüber hinaus sind die verwendeten Chelate in wässriger Form häufig instabil.

Um eine quantitative Auswertung von molekularen Wechselwirkungen bei Sonden-Array basierten Experimenten durch Fluoreszenzmessung und eine Normierung solcher Signale zu erreichen, werden zur Eichung bzw. Referenzierung die Experimente unter zweifacher Färbung der Sondenmoleküle, z.B. durch kompetative Hybridisierung, durchgeführt (M. Shena, D. Shalon, R.W. Davis, P.O. Brown, Quantitative monitoring of gene expression patterns with a complementary DNA microarray, Science, 1995, 220,467-70 und D. Shalon, S.J. Smith, P.O. Brown, A DNA microarray system for analyzing complex DNA samples using two-color fluorescent probe for hybridization, Genome Res., 1996, 6, 639-45). Da bei solchen Eichstandards die durch die Referenzmoleküle erhaltenen Signale stets von den konkreten experimentellen Bedingungen abhängig sind, ist ein quantitativer, geräte- oder systemübergreifender Vergleich schwer möglich.

US 5,414,258 beschreibt eine Vorrichtung zur Kalibrierung von Fluoreszenzdetektoren unter Verwendung von nicht-sichtbarem Licht.

Anhand der Nachteile der aus dem Stand der Technik bekannten Fluoreszenzeichstandards wird deutlich, dass ein großer Bedarf an Vorrichtungen besteht, die eine Kalibrierung von Fluoreszenzdetektionssystemen hinsichtlich deren räumlichen und zeitlichen Auflösungsvermögens sowie hinsichtlich deren geometrischen und dynamischen Eigenschaften ermöglichen.

Zusätzlich besteht ein großer Bedarf an Vorrichtungen zur Referenzierung von Fluoreszenzsignalen die den system- und geräteübergreifenden Vergleich und/oder den testübergreifenden Vergleich von Fluoreszenzsignalen von z.B. Sonden-Array basierten Experimenten ermöglichen.

Die vorliegende Erfindung hat die Aufgabe, Vorrichtungen zur Verfügung zu stellen, die eine Referenzierung von Fluoreszenzsignalen hinsichtlich der gemessenen Intensität und/oder eine Kalibrierung von Fluoreszenzdetektionssystemen hinsichtlich deren Sensitivität, deren räumlichen und zeitlichen Auflösungsvermögens und/oder hinsichtlich deren geometrischen und dynamischen Eigenschaften erlauben. Eine weitere Aufgabe der vorliegenden Erfindung ist es, Vorrichtungen zur Verfügung zu stellen, die leicht einen geräte- und systemübergreifenden Vergleich von Fluoreszenzsignalen aus Experimenten, wobei es sich z.B. um Sonden-Array basierte Experimente handeln kann, ermöglichen. Ferner ist es eine Aufgabe der vorliegenden Erfindung, Fluoreszenzeichstandards zur Verfügung zu stellen, die einen testübergreifenden Vergleich von Fluoreszenzsignaldaten erlauben. Schließlich ist es eine Aufgabe der vorliegenden Erfindung, Vorrichtungen zur Verfügung zu stellen, die eine Referenzierung bzw. Normierung von Fluoreszenzsignalen unter Berücksichtigung von Bleich- und Fluoreszenzlöschungseffekten erlauben.

Eine weitere Aufgabe der vorliegenden Erfindung ist es, Verfahren zur Herstellung von solchen Fluoreszenzeichstandards zur Verfügung zu stellen.

Zur Lösung dieser und weiterer Aufgaben, die sich aus der Beschreibung der Erfindung ergeben, dienen die Merkmale der unabhängigen Patentansprüche. Vorteilhafte Ausgestaltungen der Erfindung sind in den Unteransprüchen definiert.

Ein Fluoreszenzeichstandard im Rahmen der Verwendung Erfindung umfasst einen im Wesentlichen nicht fluoreszierenden Träger, auf dem in definierten Bereichen mindestens eine Polymerschicht so aufgebracht ist, dass diese Bereiche nach entsprechender Bestrahlung fluoreszieren, wobei mindestens zwei der fluoreszierenden Polymerschichten sich hinsichtlich ihrer Dicke und/oder Zusammensetzung unterscheiden.

Solche Fluoreszenzeichstandards bzw. Standards zeigen in den definierten Bereichen nach entsprechender Bestrahlung eine Fluoreszenz, deren Intensität vorbestimmbar und reproduzierbar einstellbar ist. Damit können Fluoreszenzeichstandards zur Kalibrierung von verschiedenen Fluoreszenzdetektionssystemen hinsichtlich deren räumlichen und zeitlichen Auflösungsvermögens, hinsichtlich deren geometrischen und dynamischen Eigenschaften sowie hinsichtlich deren Sensitivität verwendet werden.

Da der Wellenlängenbereich der in den definierten Bereichen eines Fluoreszenzeichstandards nach entsprechender Bestrahlung hervorgerufenen Fluoreszenz durch Änderung der Zusammensetzung der Polymerschichten vorbestimmbar und reproduzierbar einstellbar ist, können die Fluoreszenzeichstandards zur Kalibrierung von verschiedenen Fluoreszenzdetektionssystemen hinsichtlich deren dynamischen Eigenschaften verwendet werden.

Die Polymerschichten von erfindungsgemäßen Vorrichtungen werden in definierten Bereichen aufgebracht, deren Form und Größe vorbestimmbar und reproduzierbar eingestellt werden kann. Solche Fluoreszenzeichstandards, die auch als strukturierte Fluoreszenzeichstandards bezeichnet werden, können zur Kalibrierung von unterschiedlichen Fluoreszenzdetektionssystemen hinsichtlich deren räumlichen Auflösungsvermögens verwendet werden.

Da die Fluoreszenzeigenschaften der Fluoreszenzeichstandards nur von der Dicke und/oder der Zusammensetzung der in den definierten Bereichen aufgebrachten Polymerschichten abhängen und z.B. nicht von Komponenten der Target-Lösungen beeinflusst werden, eignen sich die Fluoreszenzeichstandards zur geräte- und detektionsübergreifenden und/oder zur testübergreifenden Bewertung und Referenzierung von Fluoreszenzsignalen, die z.B. bei Sonden-Array basierten Experimenten gemessen werden.

Bei den in den definierten Bereichen von erfindungsgemäßen Vorrichtungen aufgebrachten Polymerschichten kann es sich um eine oder mehrere Polymerschichten handeln, die sich in ihrer Zusammensetzung und/oder Dicke unterscheiden. Die Polymerschichten bestehen aus mindestens einem fluoreszierenden Polymer oder aus einem Polymergemisch, wobei mindestens eine Polymerkomponente des Gemischs fluoreszierend ist. Bevorzugte fluoreszierende Polymere umfassen z.B. Positiv- und/oder Negativ-Photolacke auf Basis von Epoxidharzen wie z.B. SU8 und Novolacke und/oder PMMA und/oder photosensitives Polyimid und/oder Benzocyclobuten. Polymere, die für die Herstellung von Fluoreszenzeichstandards der erfindungsgemäßen Vorrichtungen geeignet sind; d. h. die nach entsprechender Bestrahlung eine Fluoreszenz zeigen, sind auch aus US 6,091,488 oder US 4,482,424 bekannt.

Die Polymerschichten von erfindungsgemäßen Vorrichtungen können neben mindestens einem Polymer zusätzlich fluoreszierende Stoffe enthalten, bei denen es sich nicht um Polymere handelt. Da diese Stoffe in die Polymerschichten eingebettet sind, werden ihre Fluoreszenzeigenschaften von Umgebungsfaktoren (z.B. Komponenten der Target-Lösungen) nicht beeinflusst. Bevorzugt umfassen solche fluoreszierenden Stoffe Chromophore, organische Farbstoffe wie z.B. Azofarbstoffe, Triphenylmethanfarbstoffe, Porphyninenfarbstoffe und/oder anorganische Farbstoffe wie z.B. metallische Farbstoffe und insbesondere Lanthanide. Solche Stoffe umfassen auch Perylen-Derivate, wie sie in H. Langhals, J. Karolin, L. B.-A. Johansson, Spectroscopic properties of new and convenient standards for measuring fluorescence quantum yields, J. Chem. Soc., Faraday Trans., 1998, 94, 2919-2922 und S. Kalinin, M. Speckbacher, H. Langhals, L. B.-A. Johansson, A new and versatile fluorescence standard for quantum yield determination, Phys. Chem. Chem. Phys., 2001, 3, 172-174 erwähnt werden. Insbesondere kann es sich z. B. um N,N'-bis(1-hexylheptyl)-3,4:9,10-perylenbis(dicarboximid), perlyene-3,4,9,10-tetracarboxyltetramethylester, perlyene-3,4,9,10-tetracarboxyltetranatriumsalz und N²,N³-[bis(l-hexylheptyl)-benzo[ghi]perylen-2,3,8,9,11,12-hexacarboxyl-2,3:8,9:11,12-tris(dicarboximid)-N¹,N^{1'}-(1,2-ethyl)-[N^{2'}-(I-octylnonyl)-perylen-3,4:9,10-bis(dicarboximid) handeln.

Bei erfindungsgemäßen Vorrichtungen kann der Wellenlängenbereich der in den definierten Bereichen nach entsprechender Bestrahlung auftretenden Fluoreszenz durch die Wahl der Zusammensetzung der Polymerschichten eingestellt werden. In einer bevorzugten Ausführung der Erfindung sind die auf einem nicht fluoreszierenden Träger in definierten Bereichen aufgebrachten Polymerschichten durch eine breitbandige Eigenfluoreszenz gekennzeichnet, so dass sie im sichtbaren Spektralbereich sowie im nahen IR- und UV-Bereich nach schmalbandiger Anregung Fluoreszenzsignale in einem Wellenlängenbereich größerer Anregung zeigen. In einer anderen bevorzugten Ausführung der Erfindung zeigen die Polymerschichten in den definierten Bereichen eine schmalbandige Eigenfluoreszenz, deren Wellenlängenbereich von der Zusammensetzung der Polymerschichten abhängt.

Bei einer bevorzugten Ausführung der Erfindung bestehen die Polymerschichten nur aus einem Polymer, so dass der Wellenlängenbereich der Fluoreszenz nur von diesem Polymer abhängt. In weiteren bevorzugten Ausführungen der Erfindung bestehen die Polymerschichten aus einem oder mehreren nicht fluoreszierenden Polymeren und/oder einem oder mehreren zusätzlichen fluoreszierenden Stoffen, so dass der Wellenlängenbereich der Fluoreszenz dieser erfindungsgemäßen Vorrichtungen von der Art und der Kombination der Polymere und/oder der fluoreszierenden Stoffe abhängt.

Erfindungsgemäß kann die Intensität der von einer Polymerschicht in einem definierten Bereich nach entsprechender Bestrahlung hervorgerufenen Fluoreszenz auf vielfältige Weise vorbestimmbar eingestellt werden. Die Intensität der in den definierten Bereichen nach entsprechender Bestrahlung hervorgerufenen Fluoreszenz ist erfindungsgemäß durch die Zusammensetzung der Polymerschichten und/oder die Dicke der Polymerschichten einstellbar. Erfindungsgemäß ist unter der Dicke einer Polymerschicht in einem definierten Bereich sowohl die Dicke der einzelnen Polymerschichten in einem Bereich, wenn in einem Bereich mehrere Polymerschichten aufgebracht sind, als auch die Dicke, die sich aus der Summe der Dicke der einzelnen Polymerschichten in einem Bereich ergibt, zu verstehen.

Bei einer bevorzugten Ausführung der Erfindung erfolgt die Einstellung der Intensität in einem definierten Bereich durch das sukzessive Aufbringen von Polymerschichten einheitlicher Zusammensetzung in diesem Bereich. Die in diesem Bereich entstehende Polymerschicht zeigt eine einheitliche Zusammensetzung. Entsprechend können Fluoreszenzeichstandards der erfindungsgemäßen Vorrichtungen hergestellt werden, die in allen definierten Bereichen Polymerschichten einheitlicher Zusammensetzung, aber unterschiedlicher Schichtdicke tragen. In einer besonders bevorzugten Ausführung der Erfindung können auf diese Weise Fluoreszenzeichstandards hergestellt werden, bei denen die Intensität der in einem Bereich nach entsprechender Bestrahlung hervorgerufenen Fluoreszenz sich proportional zu der Dicke der in dem jeweiligen Bereich aufgebrachten Polymerschicht verhält.

Die Intensität der Fluoreszenz in den definierten Bereichen von Eichstandards der erfindungsgemäßen Vorrichtungen ist auch durch Anderung der Zusammensetzung der Polymerschichten einstellbar. Unter Zusammensetzung der Polymerschichten wird dabei erfindungsgemäß die Art und Anzahl der Polymerkomponenten in einer Polymerschicht und/oder der zusätzlichen fluoreszierenden Stoffe sowie Menge der Polymerkomponenten und/oder zusätzlichen fluoreszierenden Stoffe pro Flächeneinheit verstanden.

In einer bevorzugten Ausführung der Erfindung werden Polymerschichten einheitlicher Dicke in verschiedenen definierten Bereichen aufgebracht, wobei die Polymerschichten sich nur hinsichtlich der Menge der zusätzlichen fluoreszierenden Teilchen pro Flächeneinheit unterscheiden. Auf diese Weise sind Fluoreszenzeichstandards der erfindungsgemäßen Vorrichtungen herstellbar, bei denen die Intensität der in den Bereichen bei entsprechender Bestrahlung hervorgerufenen Fluoreszenz sich bei gleicher Schichtdicke proportional zu der Menge der fluoreszierenden Teilchen in den verschiedenen definierten Bereichen verhält. In einer anderen bevorzugten Ausführung der Erfindung kann damit bei konstanter Konzentration der fluoreszierenden Teilchen im Polymer durch Änderung der Schichtdicke quasi linear die resultierende Intensität eingestellt werden.

Eine weitere Möglichkeit zur Einstellung der Intensität von erfindungsgemäß hergestellten Fluoreszenzeichstandards besteht darin, während des Herstellungsprozesses die Polymerschichten der erfindungsgemäßen Vorrichtungen physikalischen Behandlungsmethoden wie Bestrahlung und Temperaturbehandlung (Tempern) zu unterwerfen. Ohne an eine Hypothese gebunden sein zu wollen, wird momentan davon ausgegangen, dass durch diese Behandlungsmethoden der Vernetzungs- bzw. Quervernetzungsgrad der Polymerschichten und entsprechend die Fluoreszenzeigenschaften der Polymerschichten verändert werden. Der Begriff Vernetzungs- bzw. Quervernetzungsgrad ist dem Fachmann geläufig. Für die Einstellung der Intensität von Polymerschichten durch Verfahren zur Veränderung des Vernetzungsgrads, eignen sich insbesondere Polymere, die eine duroplastische Vernetzung aufweisen wie z.B. die erwähnten Photolacke wie SU8.

Erfindungsgemäß können durch das sukzessive Aufbringen von Polymerschichten unterschiedlicher Dicke und/oder unterschiedlicher Zusammensetzung und/oder unterschiedlichen Quervernetzungsgrads in mehreren definierten Bereichen auf ein und dem selben Träger Fluoreszenzeichstandards hergestellt werden, die sich durch eine große Bandbreite sowohl hinsichtlich der Intensitäten als auch der Wellenlängenbereiche der nach entsprechender Bestrahlung auftretenden Fluoreszenz unterscheiden. Solche Fluoreszenzeichstandards der erfindungsgemäßen Vorrichtungen sind vielfältig zur Kalibrierung von Fluoreszenzdetektionssystemen hinsichtlich deren räumlichen und zeitlichen Auflösungsvermögens sowie deren dynamischen und geometrischen Eigenschaften einsetzbar. Solche erfindungsgemäßen Vorrichtungen können auch als Fluoreszenzeichstandards verwendet werden, die leicht einen Vergleich von Fluoreszenzsignalen zwischen unterschiedlichen Detektionssystemen, aber auch Geräten eines Systems zulassen.

Die Fluoreszenzeigenschaften, wie z.B. die Quantenausbeute der fluoreszierenden Bereiche sind wegen der chemischen und physikalischen Eigenschaften der verwendeten Polymere und zusätzlichen fluoreszierenden Stoffe über die Bestrahlungszeit Änderungen unterworfen, so dass sich die resultierende Intensität nach einer gewissen Zeit der Nutzung verringert (Bleichen, siehe auch Miehler, 1992, Kunststoff-Mikromechanik: Morphologie, Deformations- und Bruchmechanismen., Hanser, München/Wien).

Erfindungsgemäß können die in definierten Bereichen abgelegten Polymerschichten durch geeignete Herstellungsprotokolle (z.B. durch so genannte Temperprotokolle) hinsichtlich ihrer Intensitätsveränderungen über die Zeit derartig optimiert werden, dass diese Veränderungen linear sind und demzufolge die Intensitätsverhältnisse der resultierenden Fluoreszenz der einzelnen definierten Bereiche des strukturierten Standards konstant bleiben.

Solche Fluoreszenzeichstandards der erfindungsgemäßen Vorrichtungen können für die Kalibrierung von Fluoreszenzdetektionsgeräten hinsichtlich deren zeitlichen Auflösungsvermögens und zur Normierung von Experimenten hinsichtlich ihres zeitlichen Verlaufs verwendet werden. Da bei solchen Fluoreszenzeichstandards der erfindungsgemäßen Vorrichtungen die Veränderungen der Intensität über die Zeit linear sind, können diese Standards auch für die Normierung von Experimenten auf Detektionsgeräten verwendet werden, deren optische Eigenschaften zeitlichen Änderungen (z.B. Laser- oder Lampenleistung) unterworfen sind.

Als bevorzugte Ausführungsformen können damit auch Fluoreszenzeichstandards der erfindungsgemäßen Vorrichtungen hergestellt werden, deren Fluoreszenzausbeute über die Bestrahlungsdauer und den Alterungsprozess linear bzw. hinreichend vorbestimmbar beschrieben werden kann. Solche Fluoreszenzeichstandards können z.B. zur Referenzierung von Fluoreszenzsignalen von Experimenten, die zu unterschiedlichen Zeitpunkten durchgeführt wurden, verwendet werden. Außerdem erlauben sie den geräte- und systemübergreifenden Vergleich von Fluoreszenzsignalen.

In einer bevorzugten Ausführung der Erfindung werden die Polymerschichten in definierten Bereichen unterschiedlicher Form und/oder Größe auf einem im Wesentlichen nicht fluoreszierenden Träger aufgebracht. Bei besonders bevorzugten Ausführungsformen haben diese definierten Bereiche eine quadratische, rechteckige und/oder kreisförmige Gestalt, deren Seitenlängen bzw. Durchmesser sich zwischen 500 nm und 5 mm bewegen.

Solche erfindungsgemäßen strukturierten Fluoreszenzeichstandards können zur Kalibrierung von unterschiedlichen Fluoreszenzdetektionssystemen hinsichtlich deren räumlichen Auflösungsvermögens verwendet werden. Unter räumlichem Auflösungsvermögen ist dabei erfindungsgemäß die Separierbarkeit zweier abgebildeter fluoreszierender Punkte zu verstehen.

Da Fluoreszenzeichstandards der erfindungsgemäßen Vorrichtungen hergestellt werden können, deren definierte Bereiche Maßtoleranzen im 10 nm-Bereich aufweisen, können solche Fluoreszenzeichstandards bei mikroskopischen Techniken, wie z.B. der konfokalen 3-D-Mikroskopie als Normierungsinstrument für laterale und axiale Distanzen verwendet werden.

In einer besonders bevorzugten Ausführungsform sind die definierten Bereiche in Array-Form auf dem Träger aufgebracht, d. h. dass mehrere definierte Bereiche gleicher Größe und Form zu einem Array-Element gruppiert sind, wohingegen Bereiche anderer Form und/oder Größe zu anderen Array-Elementen gruppiert sind.

In bevorzugten Ausführungsformen der Fluoreszenzeichstandards der erfindungsgemäßen Vorrichtungen kann die Dicke der Polymerschichten so eingestellt werden, dass die maximale Dicke der verschiedenen Polymerschichten in einem Bereich deutlich geringer ist als die minimale Fokustiefe handelsüblicher konfokaler Detektionssysteme. Erfindungsgemäß sollten solche Fluoreszenzeichstandards eine bevorzugte Schichtdicke zwischen wenigen Nanometern und maximal 50 Mikrometern aufweisen, bevorzugt sollten die Schichtdicken zwischen einigen nm und 20 µm, zwischen 100 nm und 10 µm, besonders bevorzugt zwischen 200 nm und 5 µm liegen. Unter Fokustiefe ist erfindungsgemäß der Bereich entlang der optischen Achse zu verstehen, in dem eine Detektion von Fluoreszenzsignalen möglich ist.

Dieser Bereich wird bei konventioneller Mikroskopie durch die numerische Apertur und bei konfokaler Scanningmikroskopie durch die Größe der Lochblenden (Pinholes) bestimmt. Solche Fluoreszenzeichstandards der erfindungsgemäßen Vorrichtungen können zur Kalibrierung von physikalischen Aufbauten und Geräten, zur Erfassung von Fluoreszenzsignalen sowie zur Referenzierung von Fluoreszenzsignalen entsprechend markierte Substanzen und Substanzgruppen verwendet werden.

Die Polymerschichten werden erfindungsgemäß auf im Wesentlichen nicht fluoreszierenden, bevorzugt optisch durchlässigen Trägern aufgebracht. Bei bevorzugten Ausführungen der Vorrichtung bestehen diese Träger aus Glas, besonders bevorzugt aus Quarzglas und Borofloatglas oder aus optisch durchlässigen, nicht fluoreszierenden polymeren Scheiben, besonders bevorzugt aus Polycarbonat, PMMA und/oder Folien. Als Träger eignen sich unter Umständen auch optisch nicht transparente Materialien, die im Wesentlichen keine Eigenfluoreszenz aufweisen.

In einer Ausführung der Erfindung sind die Fluoreszenzeichstandards mit weiteren Trägersystemen verbunden. Diese Trägersysteme bestehen aus ebenfalls im Wesentlichen nicht fluoreszierenden Materialien. Bevorzugt handelt es sich dabei um optisch durchlässige Materialien wie Glas, besonders bevorzugt um Quarzglas, aber auch um optisch nicht transparente Materialien wie Plastik und/oder Metall, die im Wesentlichen keine Eigenfluoreszenz aufweisen.

In einer besonders bevorzugten Ausführungsform handelt es sich bei diesem Trägersystem um einen handelsüblichen Objektträger, wie er für z. B für die Immunfluoreszenzmikroskopie verwendet wird. Auf solchen Trägern können z.B. Zellen oder Gewebeschnitte immobilisiert und durch Abgleich der Signale gegen den Fluoreszenzeichstandard der erfindungsgemäßen Vorrichtungen direkt ausgewertet werden.

Eine Integration der Fluoreszenzeichstandards der erfindungsgemäßen Vorrichtungen kann z.B. auch direkt auf den Trägern erfolgen, auf denen Substanzbibliotheken in Form eines Sonden-Arrays abgelegt sind oder werden. Solche Fluoreszenzeichstandards erlauben eine unmittelbare Referenzierung von Fluoreszenzsignalen und ermöglichen so die Bewertung von testspezifischen Untersuchungen. Zur Anbindung der Substanzbibliotheken kann die Oberfläche der Träger in mindestens den Bereichen, die die Substanzbibliothek enthalten sollen, durch Amino-, Carboxy-, Aldehyd- oder Epoxidgruppen funktionalisiert sein. Weitere funktionelle Gruppen zur Anbindung von Substanzbibliotheken sind dem Fachmann bekannt.

Dabei sind erfindungsgemäß die Träger, auf denen die Fluoreszenzeichstandards bzw. die Substanzbibliotheken in Form von Sonden-Arrays abgelegt werden, so zu wählen, dass sie im Wesentlichen nicht fluoreszierend und, wenn benötigt, optisch durchlässig sind. Bevorzugte Materialien für die Herstellung von solchen Trägern sind Glas, besonders bevorzugt Quarzglas, Borofloatglas und/oder Polymere und/oder Silicium. Es können auch Materialien gewählt werden, die optisch nicht durchlässig sind, aber im Wesentlichen nicht fluoreszierend sind.

Bei der Integration der Fluoreszenzeichstandards der erfindungsgemäßen Vorrichtungen in Sonden-Arrays können diese Sondenarrays durch Substanzbibliotheken auf Protein-, Peptid- oder Nukleinsäurebasis funktionalisiert sein. Bevorzugt handelt es sich bei den Proteinsubstanzbibliotheken mit denen die Fluoreszenzeichstandards der erfindungsgemäßen Vorrichtungen funktionalisiert sein können, um Antikörperbibliotheken, um Rezeptorbibliotheken, Rezeptor-Ligand-Bibliotheken und/oder Hormonbibliotheken.

Bei den Peptidbibliotheken, mit denen erfindungsgemäß Fluoreszenzeichstandards funktionalisiert sein können, handelt es sich üblicherweise um pharmazeutisch oder biologisch aktive Peptide, um Antigenbibliotheken und/oder um Rezeptor-Ligand-Bibliotheken und/oder um Hormonbibliotheken.

Bei den Nukleinsäurebibliotheken, mit denen erfindungsgemäß Fluoreszenzeichstandards funktionalisiert sein können, handelt es sich bevorzugt um DNA-Molekül-Bibliotheken und/oder RNA-Molekülbibliotheken. Besonders bevorzugt handelt es sich um mRNA-Bibliotheken, um rRNA-Bibliotheken, um genomische DNA-Bibliotheken und/oder cDNA-Bibliotheken und/oder Plasmide.

In einer bevorzugten Ausführungsform können Fluoreszenzeichstandards der erfindungsgemäßen Vorrichtungen direkt in die Fluoreszenzdetektionssysteme integriert werden, so dass eine online-Kalibrierung der Geräte möglich ist. Da die Eigenschaften der Fluoreszenzeichstandards der erfindungsgemäßen Vorrichtungen durch den Herstellungsprozess und durch die Zusammensetzung und Dicke der Polymerschicht sowie die Größe und Form der definierten Bereiche, in denen die Polymerschichten, die nach entsprechender Bestrahlung fluoreszieren, aufgebracht sind, vorbestimmbar einstellbar sind, können die mit verschiedenen Detektionssystemen gemessenen Fluoreszenzintensitäten von Sonden-Array basierten Experimenten system- und geräteübergreifend direkt miteinander verglichen werden.

Die Fluoreszenzeichstandards der erfindungsgemäßen Vorrichtungen können auch als universelles externes Werkzeug verwendet werden, um mehrere unterschiedliche Detektionssysteme in der beschriebenen Weise zu kalibrieren.

Fluoreszenzeichstandards der erfindungsgemäßen Vorrichtungen können auch in geschlossene Kammersysteme (z.B. PCR- und/oder Hybridisierungskammem) integriert sein.

Fluoreszenzeichstandards der erfindungsgemäßen Vorrichtungen können nach Verfahren hergestellt werden, bei denen die nach Bestrahlung fluoreszierenden Schichten gezielt in definierten Bereichen auf Trägern aufgebracht werden. Solche Verfahren sind z.B. aus der Halbleitertechnik bekannt (US 6,091,488). Die Polymerschichten von Fluoreszenzeichstandards der erfindungsgemäßen Vorrichtungen können bevorzugt durch photolithographische Verfahren, durch Spotten, durch Trockenätzen, durch Ionenimplantation, durch drucktechnische Verfahren, durch Walzen, durch Spritzgießen oder durch Oberflächenprägung auf den Träger aufgebracht werden.

Allgemein können die Polymerschichten der erfindungsgemäßen Vorrichtungen die auch als funktionelle Polymerschichten bzw. als Funktionsschichten bezeichnet werden, durch chemische und/oder physikalische Methoden zur Beschichtung auf dem Träger aufgebracht werden. Bei chemischen Methoden kann die Aufbringung der Polymerschichten dabei aus der Gasphase (z.B. durch CVD oder Oxidation), aus der Flüssigphase (z.B. durch elektrolytische, elektrochemische und andere nasschemische Verfahren) oder aus der Festphase (z.B. durch Oxidation) erfolgen. Bei physikalischen Methoden kann die Aufbringung aus der Gasphase oder aus dem Plasma (z.B. durch PVD, Sputtern oder Bedampfen), aus der Flüssigphase (z.B. durch Spin-On-Verfahren, durch Lackieren, Spritzen oder Tauchen) oder aus der Festphase (z.B. durch Lamination) erfolgen. Es können auch Kombinationen dieser Verfahren oder nachträgliche Modifikationen wie Ionenimplantation angewandt werden (z.B. PECVD). Die jeweiligen Methoden und entsprechende Ausgestaltungen sind dem Fachmann bekannt (siehe z.B. W. Menz, J. Mohr, Mikrosystemtechnik für Ingenieure, VCH, 1997).

Die Polymerschichten der erfindungsgemäßen Vorrichtungen können durch verschiedene Verfahren strukturiert werden, die dem Fachmann bekannt sind. Dabei kann es sich um biochemische Methoden handeln, wie z.B. die enzymatisch vermittelte selektive Strukturierung (in WO98/08086 beschrieben), aber auch um chemische und/oder mikrotechnische Verfahren. Zu diesen gehören selektives Ätzen der Funktionsschicht gegen eine Maskierung, die selbst gegen den Ätzer unempfindlich ist (z.B. Flüssig- oder Trockenätzen). Ebenfalls anwendbar sind Verfahren, die selektive Eigenschaftsveränderungen durch Strahlung, wie z.B. durch Bestrahlung mit UV oder Lasern bewirken. Dazu zählt die Photolithographie. Andere Methoden umfassen self-assembling layers. Diese Methoden können unter Verwendung einer Maskierung, aber auch durch "direkt schreibende" Vorrichtungen (Spotten) durchgeführt werden. Drucktechnische Verfahren wie Spotten oder Offsetdruck oder andere Verfahren wie Walzen, Stempeln, Spritzgießen oder Oberflächenpräge-Verfahren können ebenfalls verwendet werden. Unterschiedliche Ausführungsformen der Methoden sind dem Fachmann bekannt (siehe z.B. W. Menz, J. Mohr, Mikrosystemtechnik für Ingenieure, VCH, 1997).

In einer bevorzugten Ausführungsform werden die Polymerschichten durch negative oder positive photolithographische Verfahren, besonders bevorzugt durch negative photolithographische Verfahren aufgebracht. Besonders bevorzugt sind negative photolithographische Verfahren, bei denen die Polymerschichten nach Bestrahlung im Entwickler unlöslich werden. Unbelichtete Bereiche bleiben dagegen im Entwickler löslich und können entfernt werden. Solche photolithographische Verfahren zur Strukturübertragung mittels eines Photoresists sind dem Fachmann bekannt. Dabei sind chemische und physikalische Verfahren, die das Aufbringen einer homogenen Funktionsschicht auf dem Träger erlauben, bevorzugt. Besonders bevorzugte Verfahren umfassen CVD-, PVD- und Spin-On-Verfahren.

Die Parameter, durch deren Wahl bei photolithographischen Verfahren (aber auch anderen Verfahren) die Dicke der Polymerschichten eingestellt werden kann, umfassen die Bearbeitungsparameter (Verfahrensparameter) wie die Umlaufgeschwindigkeit, die Dauer des Herstellungsprozesses, die Viskosität des Polymers, die Temperatur und/oder die Luftfeuchtigkeit. Bei der Verwendung von Photopolymeren umfassen die Bearbeitungsparameter auch die Bestrahlungsdosis, die Parameter des Entwicklungsprozesses und den Temperprozess.

Bei photolithographischen Verfahren kann die Form und Größe der definierten Bereiche, in denen die Polymerschichten aufgebracht werden, durch Verwendung einer Maske und/oder Lochmasken, z.B. durch Verwendung einer Maske im 1:1 1 Maßstab festgelegt werden. Je nach Aussparung der Maske sind damit erfindungsgemäß verschiedene geometrische Formen und Größen für die definierten Bereiche einstellbar. Ebenfalls können nach diesem Verfahren Fluoreszenzeichstandards der erfindungsgemäßen Vorrichtungen hergestellt werden, bei denen die in verschiedenen definierten Bereichen abgelegten Polymerschichten eine Array-Form aufweisen. Als Lochmasken wird bevorzugt strukturiertes Chrom auf Glas und/oder Quarz verwendet.

Durch Wiederholen des photolithographischen Verfahrens können Fluoreszenzeichstandards der erfindungsgemäßen Vorrichtungen hergestellt werden, bei denen in verschiedenen Bereichen Polymerschichten mit unterschiedlicher Zusammensetzung und/oder Dicke aufgebracht sind. Durch Ändern der Temper- und/oder Bestrahlungsprotokolle, die bei photolithographischen Verfahren verwendet werden, kann zudem der Vernetzungsgrad (und damit die Intensität) der Polymerschichten in definierten Bereichen gezielt geändert werden. Durch Ändern der Temperprotokolle kann ebenfalls das Bleichverhalten von Fluoreszenzeichstandards der erfindungsgemäßen Vorrichtungen gezielt eingestellt werden.

Um erfindungsgemäß hergestellte Fluoreszenzeichstandards mit einem z.B. optisch durchlässigen, im Wesentlichen nicht fluoreszierenden Trägersystem zu verbinden, können alle Verfahren verwendet werden, die den Eichstandard mit dem Trägersystem verbinden und die Eigenschaften des Fluoreszenzeichstandards nicht negativ beeinflussen. Zur Montage ist es notwendig, die Oberfläche der Standards durch geeignete Verfahren und Vorrichtungen in die Ebene von Probenträgem derart auszurichten, dass eine eindeutige Zuordnung der Lage der fluoreszierenden Schichten in Höhe und örtlicher Lage bezüglich definierter Bereiche des Trägers (z.B. Außenkanten) möglich ist. Dazu sind z.B. temporäres Aufkleben oder Vakuumeinrichtungen geeignet. Bevorzugt wird der Fluoreszenzeichstandard auf dem Trägersystem durch Kleben, durch Lagejustage oder durch ein Vakuumsystem aufgebracht.

Bei der Herstellung solcher Fluoreszenzeichstandards der erfindungsgemäßen Vorrichtungen ist zu berücksichtigen, dass die Methoden zur Assemblierung der Fluoreszenzeichstandards und der Sonden-Arrays die Funktion der Bauelemente nicht negativ beeinflussen. Dementsprechend ist zu gewährleisten, dass z.B. die verwendeten Klebstoffe keine Autofluoreszenz zeigen und durch die verwendeten Bauteile keine wesentlichen Streuungen oder Reflektionen auftreten.

Werden die Fluoreszenzeichstandards z.B. mit Substanzbibliotheken als Sonden-Arrays funktionalisiert, kann der Fluoreszenzeichstandard mit dem Trägersystem, auf dem sich die Substanzbibliotheken befinden, verbunden sein.

In einer anderen bevorzugten Ausführungsform können die Fluoreszenzeichstandards auf Trägern zunächst im Wafer-Maßstab gefertigt werden und die entsprechend vereinzelten Fluoreszenzeichstandards dann durch Ablegen von Substanzbibliotheken in Array-Form funktionalisiert werden.

Die Fluoreszenzeichstandards der erfindungsgemäßen Vorrichtungen lassen sich in unterschiedlicher Art und Weise zur Kalibrierung von Fluoreszenzdetektionssystemen einsetzen. Durch die Verwendung von Fluoreszenzeichstandards der erfindungsgemäßen Vorrichtungen für gerätespezifische Kalibrierungen lassen sich die Geräteeigenschaften definieren. Zum Beispiel kann die entsprechende Form und Größe der definierten Bereiche, in denen die nach entsprechender Bestrahlung fluoreszierenden Polymerschichten abgelegt sind, zur Bestimmung des räumlichen Auflösungsvermögens verwendet werden. Fluoreszenzeichstandars der erfindungsgemäßen Vorrichtungen, die in mehreren definierten geometrischen Bereichen Polymerschichten unterschiedlicher Dicke, aber einheitlicher Zusammensetzung aufweisen, wodurch die nach entsprechender Bestrahlung hervorgerufene Intensität der Fluoreszenz in den verschiedenen Bereichen sich proportional zur Polymerschichtdicke verhält, erlauben eine Kalibrierung eines entsprechenden Detektionssystems hinsichtlich seiner dynamischen Eigenschaften. Erfindungsgemäß wird unter dynamischen Eigenschaften der Bereich auswertbarer Fluoreszenzintensitäten bei einer Messung verstanden. Z.B. lässt sich so der Intensitätsbereich festlegen, in dem ein CCD-Detektor linear arbeiten soll. Solche Fluoreszenzeichstandards der erfindungsgemäßen Vorrichtungen können auch für die Einstellung der Sensitivität des Detektionssystems verwendet werden, d. h. der Festlegung, welche minimalen oder maximalen Fluoreszenzintensitäten ein Detektionssystem noch als Signal werten soll.

Fluoreszenzeichstandards der erfindungsgemäßen Vorrichtungen, bei denen die nach entsprechender Bestrahlung in verschiedenen geometrischen Bereichen mit Polymerschichten unterschiedlicher Dicken und/oder Zusammensetzung hervorgerufene Intensität der Fluoreszenz vorbestimmbar und regulierbar abklingt, können benutzt werden, um Rückschlüsse auf das gerätespezifische Bleichen von Fluoreszenzsignalen zu ziehen.

Ferner können Fluoreszenzeichstandards der erfindungsgemäßen Vorrichtungen zur Kalibrierung der geometrischen Eigenschaften von Detektionssystemen, insbesondere zur Korrektur der Bildfeldwölbung (Flatfieldbestimmung) bei CCD-Detektoren verwendet werden.

Erfindungsgemäß wird unter geometrischen Eigenschaften allgemein die örtliche Auflösung, der Abbildungsmaßstab, die Bildfeldwölbung und andere geometrische Fehler, die aus der optischen Konstruktion resultieren, verstanden.

Da die Fluoreszenzeigenschaften von Fluoreszenzeichstandards der erfindungsgemäßen Vorrichtungen nicht von äußeren Faktoren abhängen und vorbestimmbar und reproduzierbar einstellbar sind, können sie verwendet werden, um verschiedene Geräte des gleichen Detektionsprinzips (geräteübergreifende Kalibrierung) oder Geräte unterschiedlichen Detektionprinzips (systemübergreifende Kalibrierung) zu kalibrieren. Die Kalibrierung kann dabei auf Normwerte, die z.B. in Arbeitsgruppen und Labors verwendet werden, erfolgen, auf die dann Fluoreszenzsignale aus experimentellen Messungen bezogen werden.

Damit sind die Signale, die bei der Auswertung z.B. eines Sonden-Array basierten Experiments mit unterschiedlichen Detektionssystemen erhalten werden, direkt vergleichbar (testübergreifender Vergleich).

Fluoreszenzeichstandards der erfindungsgemäßen Vorrichtungen, die eine große Bandbreite hinsichtlich der Wellenlänge und Intensität der nach Bestrahlung der Polymerschichten in den definierten Bereichen hervorgerufenen Fluoreszenz zeigen, können auch für testspezifische Referenzierung von Fluoreszenzsignalen verwendet werden. Dies ist möglich, weil die testspezifischen Signale z.B. auf die Fluoreszenz eines definierten Bereichs bezogen werden können, deren Eigenschaften in dem Bereich des Testsignals liegen. Damit ist eine Normierung der Testsignale möglich. Die unter Verwendung von Fluoreszenzeichstandards der erfindungsgemäßen Vorrichtungen erhaltenen normierten experimentellen Daten sind signifikant der Fehler, welche aus der Verwendung unterschiedlicher Detektoren bzw. verschiedener Einstellungen der Detektoren resultieren, behoben. Sie können daher direkt miteinander verglichen werden. Damit ermöglichen Fluoreszenzeichstandards der erfindungsgemäßen Vorrichtungen den testübergreifenden und geräteübergreifenden Vergleich von Fluoreszenzsignalintensitäten, die bei der Durchführung von Sonden-Array basierten Experimenten und Tests erhalten worden sind.

Üblicherweise werden die Einstellungen von Scannern den entsprechenden Messergebnissen angepasst. Sind bei einem Sonden-Array basierten Experiment die resultierenden Fluoreszenzsignale schwach, werden die Laserleistung oder die Sensitivität des Detektors (z.B. die Vorspannung bei Verwendung eines PMT-Systems oder die Integrationszeit bei Verwendung eines CCD-Systems) erhöht. Außerdem unterliegen die Geräte gerätespezifischen Schwankungen. Dies ist insbesondere kritisch, wenn Ergebnisse aus unterschiedlichen Zeiträumen verglichen werden sollen, da z.B. bei Laserscannern die Leistung der eingesetzten Laser sich dramatisch ändern kann. Ein Vergleich von Fluoreszenzintensitätssignalen, die zwar bei der Durchführung von gleichartigen Sonden-Array-basierten Experimenten, aber zu unterschiedlichen Zeitpunkten gemessen wurden, ist mit Fluoreszenzeichstandards der erfindungsgemäßen Vorrichtungen problemlos möglich ("time to time"-Vergleich), da über das Bleichverhalten des Standards die altersbedingten Geräteschwankungen normiert werden können. Damit können mit Hilfe von Fluoreszenzeichstandards der erfindungsgemäßen Vorrichtungen Detektionssysteme auch hinsichtlich ihrer Alterungseigenschaften, wie z.B. der Änderung der Lampenleistungen kalibriert werden.

Sollen die Fluoreszenzsignale, die bei der Durchführung von verschiedenen Sonden-Array basierten Experimenten gemessen wurden, miteinander verglichen werden, stellen für die Bewertung der Ergebnisse insbesondere die Inhomogenität der biochemischen und fluidischen Prozesse in der Probe sowie die Schwierigkeiten bei der Spoterkennung während der Auswertung ein erhebliches Problem dar. Diese Probleme erschweren den qualitativen Vergleich verschiedener Sonden-Arrays. Fluoreszenzeichstandards der erfindungsgemäßen Vorrichtungen erlauben eine erhebliche Einschränkung der Fehler und qualitative Vergleiche von Ergebnissen, die bei der Durchführung von Experimenten mit verschiedenen Sonden-Arrays an demselben Gerät, durchgeführt wurden, werden möglich ("test to test"-Vergleich).

Da mit dem dargestellten Fluoreszenzeichstandard auch unterschiedliche Detektionssysteme kalibriert werden können, können die Ergebnisse von Sonden-Array basierten Experimenten geräte- und system- und damit auch laborübergreifend analysiert werden.

Vorrichtungen, die dadurch gekennzeichnet sind, dass auf einem im Wesentlichen nicht fluoreszierenden Träger in einem oder mehreren definierten Bereichen Polymerschichten, die hinsichtlich ihrer Schichtdicke und Zusammensetzung einheitlich sind, aufgebracht sind, können ebenfalls zur Referenzierung von Fluoreszenzsignalen verwendet werden. Solche Vorrichtungen eignen sich insbesondere, wenn sie über mehrere definierte Bereiche verfügen, zur geräte- und systemübergreifenden Kalibrierung von Fluoreszenzdetektionssystemen hinsichtlich deren räumlichen Auflösungsvermögens.

Die Polymerschichten solcher Vorrichtungen können erfindungsgemäß die gleiche Zusammensetzung wie oben ausgeführt aufweisen, d. h. sie können fluoreszierende Polymere, Polymergemische mit mindestens einem fluoreszierenden Polymer und/oder zusätzliche fluoreszierende Stoffe enthalten.

Bei diesen Vorrichtungen sind die Intensität und der Wellenlängenbereich der in den Bereichen nach entsprechender Bestrahlung hervorgerufenen Fluoreszenz gleichermaßen durch die Wahl der Zusammensetzung der Polymerschichten, der Schichtdicke und durch Veränderungen des Quervernetzungsgrads vorbestimmbar und reproduzierbar einstellbar. Auch alle anderen Eigenschaften wie Bleichverhalten, Größe und Form der definierten Bereiche sind auf die oben beschriebene Art und Weise einstellbar. Ebenso können solche Vorrichtungen durch alle oben dargestellten Verfahren hergestellt werden.

Solche Vorrichtungen können generell zur qualitativen und quantitativen Referenzierung von Fluoreszenzsignalen, besonders bevorzugt zur Referenzierung von Fluoreszenzsignalen aus Sonden-Array basierten Tests und/oder zur Kalibrierung von Fluoreszenzdetektionssystemen verwendet werden.

Besonders bevorzugt können sie zur Kalibrierung von Fluoreszenzdetektionssystemen hinsichtlich deren räumlichen Auflösungsvermögens verwendet werden. Da die in einem oder mehreren definierten Bereichen aufgebrachten Polymerschichten hinsichtlich ihrer Zusammensetzung und Schichtdicke einheitlich sind, eignen sie sich nicht zur Kalibrierung der dynamischen Eigenschaften von Fluoreszenzdetektionssystemen. Auch eine Kalibrierung von Detektionssystemen über den Vergleich der Verhältnisse von unterschiedlichen Intensitäten, die nach Bestrahlung von unterschiedlichen Bereichen auftreten, ist mit diesen Vorrichtungen nicht möglich.

Solche Vorrichtungen können aber z.B. zum Abgleich von experimentell ermittelten Fluoreszenzsignaldaten auf Normwerte verwendet werden und erlauben so, den geräte- und systemübergreifenden Vergleich von Fluoreszenzsignalen. Diese Vorrichtungen erlauben auch die Kalibrierung von Fluoreszenzdetektionssystemen hinsichtlich deren Sensitivität und deren gerätespezifischen Bleichverhaltens bei denen durch die Zusammensetzung und Dicke der Polymerschichten festgelegten Intensitäten und Wellenlängenbereichen.

Im Folgenden sind Beispiele dargestellt, die besonders bevorzugte Ausführungsformen bzw. Verwendungen von Fluoreszenzeichstandards der erfindungsgemäßen Vorrichtungen darstellen. Die Beispiele sind in keiner Weise einschränkend zu deuten.

### Beispiel 1

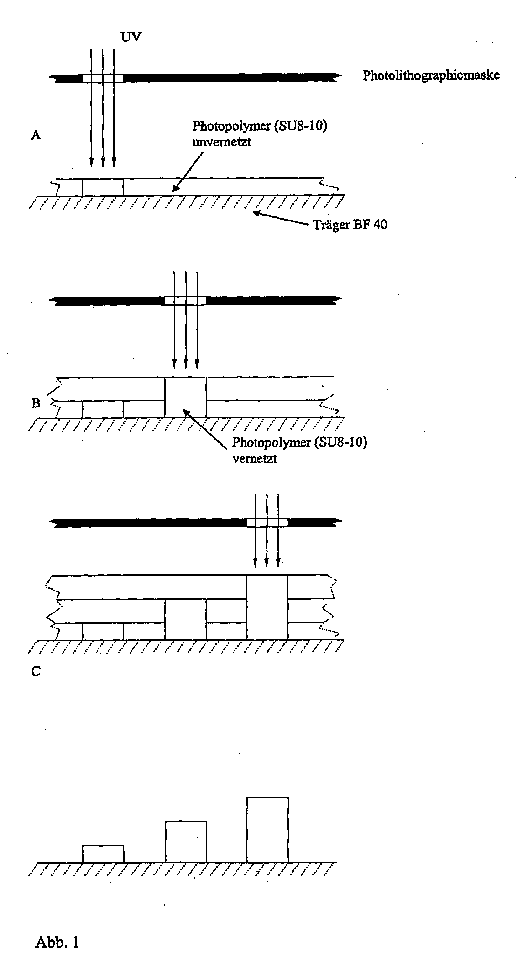

### Photolithographische Herstellung eines Fluoreszenzeichstandards der erfindungsgemäßen Vorrichtungen im Wafermaßstab (Abbildung 1):

Im Beispiel wird gezeigt, wie ein universeller Fluoreszenzeichstandard auf polymerer Basis durch negative Photolithographie hergestellt wird. Dabei wird ein Fluoreszenzeichstandard hergestellt, der in unterschiedlichen Bereichen gleicher Form und Größe Polymerschichten unterschiedlicher Dicke, aber im Wesentlichen gleicher Zusammensetzung trägt. Damit sind die Intensitäten der in den Bereichen nach entsprechender Bestrahlung hervorgerufenen Fluoreszenz proportional zur Schichtdicke.

Als Träger werden Materialien, die im gewünschten Fluoreszenzspektrum eine hohe Transparenz und geringe Eigenfluoreszenz zeigen, benutzt. Im Vorliegenden Fall wurde Borofloatglas40 der Firma Schott (BF 40, Durchmesser: 100 mm, Dicke: 0,7 mm) als Trägermaterial gewählt. Das eigentliche Funktionsmaterial (dies sind die Polymerschichten) sollte dagegen eine starke Eigenfluoreszenz aufweisen. Im gewählten Ausführungsbeispiel wurde als Polymer SU8-10, gelöst in PGMEA (organisches Lösungsmittel der Firma Sigma), gewählt, das die genannten Eigenschaften erfüllt. SU8-10 ist ein negatives, epoxy-basiertes Photopolymer, das bei UV-Bestrahlung unter 365nm polymerisiert (US 4,882,245). Die Eigenfluoreszenz und die Photostrukturierbarkeit haben den großen Vorteil, dass das gewählte Polymer durch photolithographische Verfahren strukturiert werden kann.

Zu Beginn des Herstellungsprozesses wurde das Trägermaterial getempert (180°C, 20 min). Dadurch wurden etwaige Adsorbate (oft H₂O) entfernt, die eine gute Haftung der SU8 Polymerschicht auf dem Substrat behindern. Um dies zu verstärken, wurde die Oberfläche des Substrats mit 3-Glycydoxypropyltrimethoxysilan modifiziert.

Auf das Substrat wurde dann eine erste Schicht mit einer Dicke entsprechend der gewünschten Fluoreszenz bzw. der gesuchten Sensitivität aufgebracht (siehe Abbildung 1). Dafür wurde das Spin-On-Verfahren verwendet, wobei durch Wahl der Parameter (Dauer: 30s, Umdrehungsgeschwindigkeit: 5000 rpm, Beschleunigung: 100 rpm/s für 10 s und 1000 rpm/s für 20 s, Grad der Verdünnung mit PGMEA) die gewünschte Dicke bzw. die Fluoreszenz eingestellt wurde. Dadurch wurde das Polymer homogen auf dem Substrat verteilt und das Lösungsmittel ausgetrieben. Die nachfolgende Temperung oberhalb des Glaspunktes (95°C, 15 min, so genanntes Pre-Bake) formiert und homogenisiert die Schicht.

Die Polymerschichten wurden danach mittels üblicher Mikrophotolithographie strukturiert. Dazu wurde durch Bestrahlung des Photopolymers mit UV-Licht (15 min bei ca. 300-450 nm mit 15 mW/cm², so genanntes Exposure) seine Löslichkeit im Entwickler (in diesem Fall PGMEA) verändert. SU8-10 zeigt ein Tonwertnegatives Verhalten, d. h. die UV-belichteten Bereiche polymerisieren und unbelichtete Bereiche bleiben im Entwickler lösbar. Die Bestrahlung erfolgte durch Maskenprojektion mittels Lithographiemasken, die entsprechende dünne Chrom-Strukturen auf Quarz aufwiesen. Diese Quarz-Maske besaß die gewünschte laterale Geometrie des Standards, die im Maßstab 1:1 in das Polymer abgebildet wurde. Die kleinsten Strukturen in der Maske bestimmten daher auch die kleinsten Strukturen des Standards bzw. des zu detektierenden kleinsten Auflösungstests auf dem Standard.

Nachfolgend wurde durch einen Temperschritt die Vernetzung der belichteten Bereiche vervollständigt (95° C, 15 min, so genanntes Post-Exposure-Bake). Die unbelichteten Bereiche blieben vom Entwickler noch unberührt. Diese o.g. Prozedur (Spin-On, Pre-Bake, Exposure, so genanntes Post-Exposure-Bake) wurde nun mehrfach wiederholt, wobei die zuvor belichteten (und somit vernetzten) Bereiche in nachfolgenden Belichtungsschritten durch entsprechenden Masken unbelichtet blieben. Im Beispiel wurden aufeinander folgend die Belackung, Belichtung und Temperung drei Mal durchgeführt (Abbildung 1). Die drei Schichten hatten dabei bezüglich des Polymers die folgende Zusammensetzung:
**1. Schicht:** SU8-10 (Fa. MicroChem Inc.) gelöst in PGMEA (Fa. Sigma) 50% w/w
**2. Schicht:** SU8-10 (Fa. MicroChem Inc.) gelöst in PGMEA (Fa. Sigma) 33% w/w
**3. Schicht:** SU8-10 (Fa. MicroChem Inc.) gelöst in PGMEA (Fa. Sigma) 20% w/w

Das Photopolymer SU8-10 wurde in unterschiedlichen Gewichtsverhältnissen in PGMEA gelöst. Dadurch haben die Lösungen unterschiedliche Viskositäten, wodurch Polymerschichten mit unterschiedlicher Dicke herstellbar sind. Das Lösungsmittel wird später weitestgehend ausgetrieben (zu mehr als 95%), so dass die Polymerschichten eine im Wesentlichen gleiche Zusammensetzung aufweisen.

Danach wurde die Polymerstruktur durch Eintauchen in PGMEA (Fa. Sigma) entwickelt und nochmals getempert (120° C, 30 min, so genannter Hard-Bake). Infolgedessen entstanden stufenförmige geometrische Strukturen (Abbildung 1). Die Stufenhöhen korrespondieren dann mit einer entsprechenden Fluoreszenz-Intensität, die lateralen Geometrien mit dem Auflösungsvermögen.

### Beispiel 2:

### Beispiele für Fluoreszenzeichstandards der erfindungsgemäßen Vorrichtungen

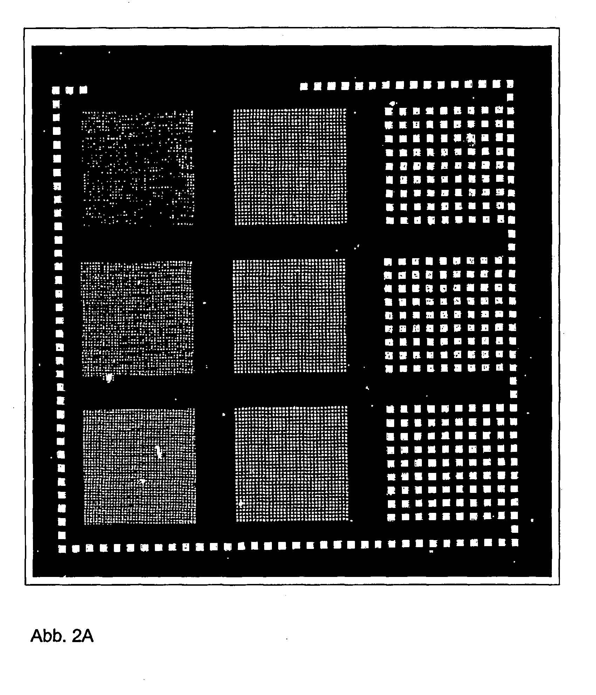

In Abbildung 2A ist ein Fluoreszenzeichstandard in Array-Form gezeigt, der auf Borofloatglas (Firma Schott) mikrolithographisch gemäß des Verfahrens aus Beispiel 1 hergestellt wurde. Der Standard besteht aus 9 Array-Elementen, die alle fluoreszierende Polymerschichten in quadratischer Form enthalten. Die Quadrate der 9 Array-Elemente verfügen über 3 Intensitätsstufen, welche aus 3 verschiedenen Dicken resultieren. Durch verschiedene Strukturgrößen und Abstände werden verschiedene Integrationsdichten von molekularen Arrays simuliert. Die Standards wurden im Wafermaßstab erzeugt und in Chips vereinzelt.

Der Standard eignet sich, um eine Bestimmung des räumlichen Auflösungsvermögens, der geometrischen Fehler, der abbildenden optischen sowie elektromechanischen und informationstechnischen Systeme als auch der Sensitivität des jeweiligen Geräts zum Zeitpunkt der Messung vorzunehmen. Zusätzlich kann der Standard zur geräteübergreifenden Bewertung der Fluoreszenzsignale von Sonden-Array basierten Experimenten verwendet werden. Dazu wurde der beschriebene Fluoreszenzstandard in verschiedenen Readersystemen ausgelesen, als 16bit-*.tif Bilder exportiert und mittels einer speziellen Software (IconoClust der Firma Clondiag) analysiert. Die unterschiedlich großen fluoreszierenden Strukturen auf dem Fluoreszenzeichstandard können verwendet werden, um geometrische Abweichungen der verschiedenen Detektionssysteme zu korrigieren. So lässt sich beispielsweise die Bildfeldwölbung eines optischen Systems zur Fluoreszenzdetektion anhand des dargestellten Fluoreszenzeichstandards durch geeignete Bildverarbeitungsprozesse analysieren und durch entsprechende Einstellung der optischen oder informationstechnischen Elemente beheben.

Es ist fernerhin möglich, die Einstellungen der Detektionssysteme z.B. hinsichtlich der Laser- oder Lampenleistung, der Integrationszeit pro Spot/Subarray oder der Signalverstärkung/Einstellung des Detektors auf einen bestimmten Wert der resultierenden Fluoreszenz des Standards abzustimmen. Damit kann z.B. der Langzeitdrift eines Detektionsapparats, welcher durch Alterungsprozesse der verwendeten Laser, Lampen oder Detektoren hervorgerufen werden kann, bestimmt werden.

Unterschiedliche Fluoreszenzsysteme können also mittels des Fluoreszenzeichstandards hinsichtlich ihrer leistungsbestimmenden Parameter kalibriert werden. Entsprechend können die Fluoreszenzsignale, die bei der Auswertung eines Sonden-Array basierten Experiments mit verschiedenen Detektionssystemen gemessen werden, direkt miteinander verglichen werden.

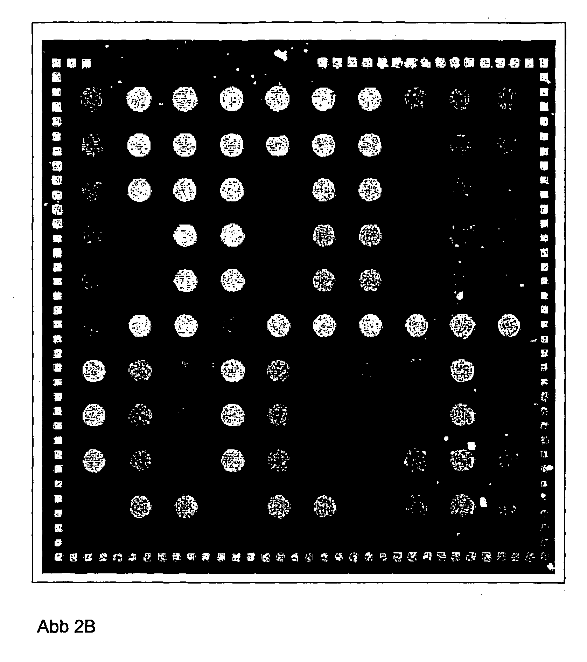

In Abbildung 2B ist ein Fluoreszenzeichstandard in Array-Form gezeigt, der auf Borofloatglas (Firma Schott) durch Spotten hergestellt wurde. Zunächst wurden fluoreszierende Standards auf verschiedenen Trägern erzeugt, indem Polymergemische SU8 (MCC Inc.) und Novolack (AZ 1514 Clariant) im Massenverhältnis 1:2, 1:3, 1:5 hergestellt und auf die Glassubstrate aufgebracht wurden. Dazu wurden Objektträger gereinigt und mittels eines Nadelspotters (Microgrid 2 /Biorobotics) mit den Polymergemischen unter Benutzung einer ungeschlitzten Spotternadel (Solidpins/Biorobotics) bespottet. Alternativ wurden die Polymergemische mit einem piezogetriebenen Dispenserkopf (Durchmesser 100 µm, beheizte Düse der Firma microdrop) aufgebracht. Dabei wurde die Dispenserdüse geheizt (55°C).

Anschließend wurde folgende Behandlung der Proben vorgenommen.
Pre-Bake: 95°C, 15min
Exposure: 1min, 15mW/cm², Flutbelichtung
Post-Bake: 95°C, 15min
Hard-Bake: 120°C, 60min

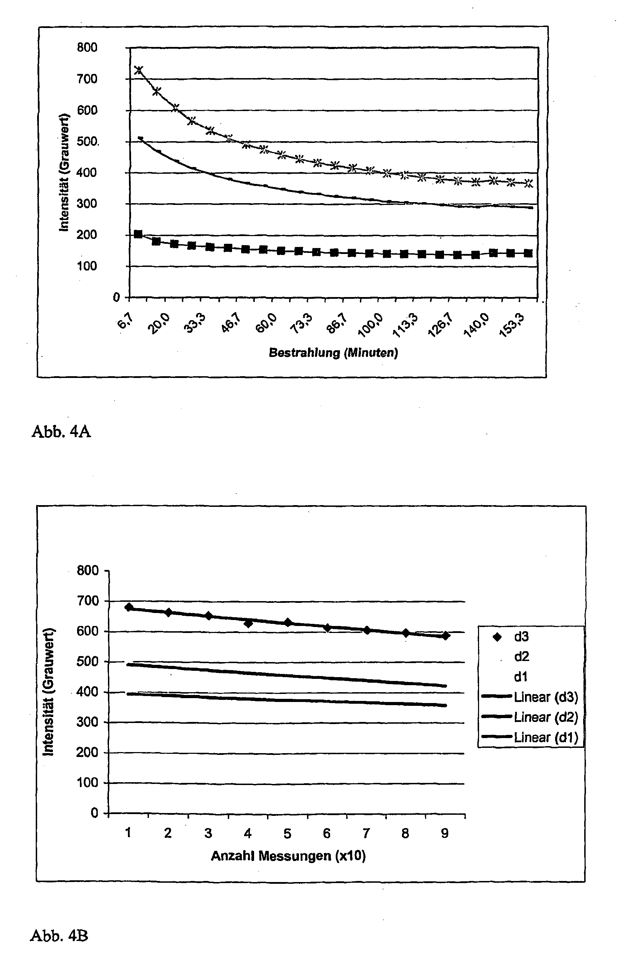

Der so hergestellte Standard besteht aus kreisförmigen Bereichen (Spots) einheitlicher Dimensionen, deren Polymerschichten sich sowohl hinsichtlich der Dicke als auch der Zusammensetzung unterscheiden. Daher verfügt der Standard über ein breites Spektrum an Intensitäten und Wellenlängenbereichen der in den Spots hervorrufbaren Fluoreszenz. Der Standard kann in gleicher Weise wie der in Abbildung 4A eingesetzt werden.

### Beispiel 3:

### Integration von Fluoreszenzeichstandards in Trägersysteme.

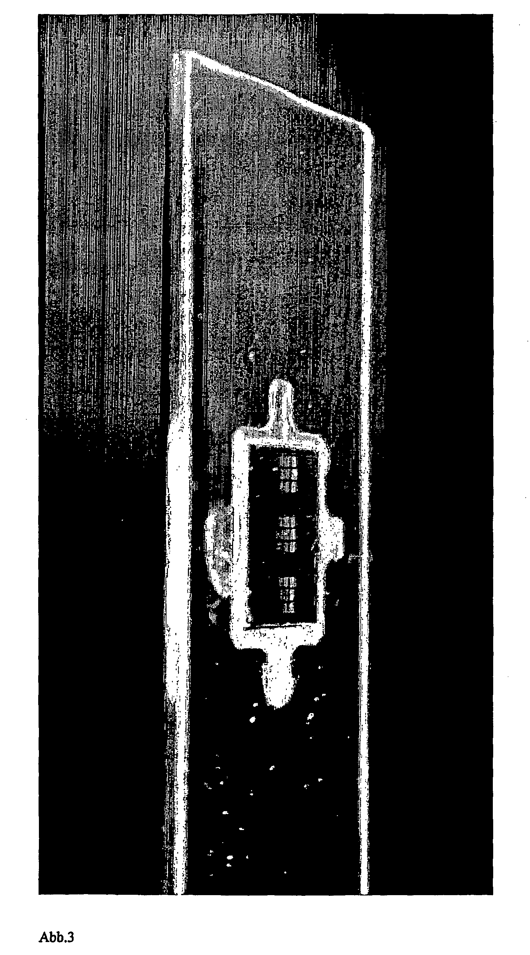

In Abbildung 3 ist gezeigt, wie ein Fluoreszenzeichstandard auf einem Objektträger durch Kleben aufgebracht ist. Als Kleber wurde Polydimethylsiloxan (Sylgard® der Firma Dow) verwendet. Solche Standards können als externes Werkzeug zur Kalibrierung von unterschiedlichen Detektionssystemen verwendet werden.

### Beispiel 4:

Einstellung der Intensität und des Bleichverhaltens bei Fluoreszenzeichstandards der erfindungsgemäßen Vorrichtungen - Verwendung von Fluoreszenzeichstands der erfindungsgemäßen Vorrichtungen über mehrere Messungen hinweg.

Im Beispiel ist gezeigt, dass bei der mikrolithographischen Herstellung von Fluoreszenzeichstandards mit Polymerschichten in drei unterschiedlichen Dicken (d1, d2, d3) ein Temperprotokoll so gewählt werden kann, dass die Intensität der in den definierten Bereichen nach mehrfacher Bestrahlung hervorgerufenen Fluoreszenz linear abklingt.

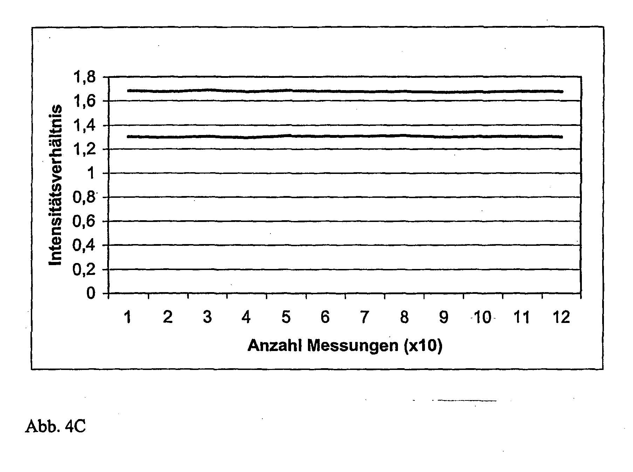

Abbildung 4A zeigt das Bleichverhalten der drei Schichten ohne thermische Behandlung. Es handelt sich um ein nicht-lineares Bleichverhalten. Abbildung 4B zeigt das Bleichverhalten der drei Schichten nach thermischer Behandlung. Es handelt sich um ein lineares Bleichverhalten. Zur Linearisierung des zeitlichen Verlaufs der Änderung der resultierenden Fluoreszenzintensitäten wurden die Proben während des Herstellungsprozesses einer thermischen Behandlung von zwei Stunden bei 180°C im Ofen unterzogen und anschließend für ca. 40 Minuten bei einer Wellenlänge zwischen 520 und 600 nm mit 40 mW/cm² bestrahlt. Dabei ändert sich das Intensitätsverhalten dergestalt, dass sich das Dickenverhältnis nicht mehr direkt proportional zu dem resultierenden Intensitätsverhältnis verhält, allerdings sind die Intensitätsverhältnisse der verschieden dicken Strukturen nun bei Bestrahlung konstant (siehe Abbildung 4C).

Man erkennt, dass durch Ändern des Temperprotokolls Fluoreszenzeichstandards herstellbar sind, die über ein wesentlich weniger ausgeprägtes und wesentlich konstanteres Bleichverhalten verfügen. Die Messungen erfolgten mit einem konfokalen Biochip-Sanner Scanarray 4000 (Packard) bei 100% Laserleistung und 85% PMT-gain.

Solche langzeitstabilen Fluoreszenzeichstandards können hervorragend zur Kalibrierung von Fluoreszenzdetektionssystemen hinsichtlich ihrer alterungsbedingten Eigenschaften verwendet werden, da die Intensitäten der drei Schichtdicken sich gleichermaßen verändern und damit das Verhältnis der Intensitäten der verschieden dicken Schichten konstant bleibt (siehe Abbildung 4C).

### Beispiel 5:

### Referenzierung von Fluoreszenzsignalen

Es wurden Fluoreszenzeichstandards wie in Beispiel 1 hergestellt, bei denen in den definierten Bereichen Polymerschichten mit unterschiedlicher Dicke aufgebracht sind.

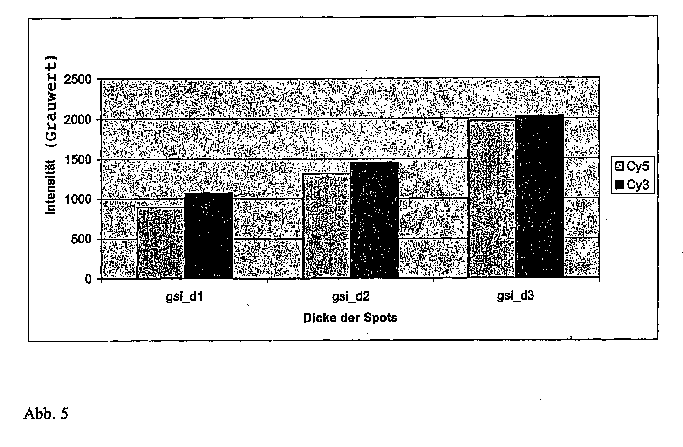

Aus Abbildung 5 wird deutlich, dass mit diesen Standards die Referenzierung von Messungen in unterschiedlichen Wellenlängenbereichen möglich sind (Cy3 und Cy5 absorbieren bei unterschiedlichen Wellenlängen) und die gemessenen Intensitäten sich proportional zur Schichtdicke (d1, d2, d3) verhalten. Dieser Fluoreszenzstandard kann daher wegen seines breitbandigen Fluoreszenzverhaltens in verschiedenen Wellenlängenbereichen zur Kalibrierung von Readersystemen verwendet werden. Mit solchen Fluoreszenzeichstandards, die über eine breitbandige Eigenfluoreszenz verfügen, ist zudem eine Referenzierung von Fluoreszenzsignalen in verschiedenen Wellenlängenbereichen möglich. Darüber hinaus können mit solchen Standards Laserscanner hinsichtlich ihrer Sensitivität kalibriert werden. Die Messungen erfolgten mit einem konfokalen Biochip-Sanner Scanarray 4000 (Packard) bei 100% Laserleistung und 85% PMT-gain.

### Beispiel 6:

### Standardisierung von Sonden-Array basierten Experimenten.

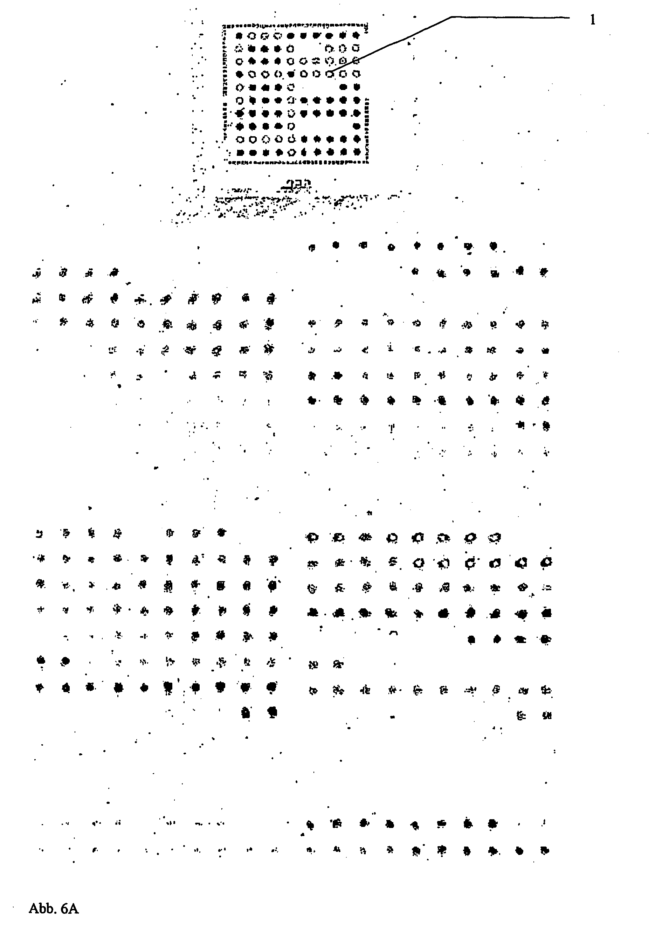

Zur Standardisierung von Sonden-Array basierten Experimenten wurden Fluoreszenzeichstandards verwendet, die ebenfalls ein Sonden-Array aufwiesen. Der Fluoreszenzeichstandard kann dann beim Auslesevorgang vor oder nach der Durchführung der biochemischen Wechselwirkungsreaktion jeweils mitberücksichtigt werden (siehe Abbildung 6A)

Es wurden Fluoreszenzeichstandards auf epoxidierten Objektträgern (Firma QMT) durch Ultraschallbohrung und Einkleben aufgebracht, die in den definierten Bereichen Polymerschichten mit gleicher Polymerdicke aber unterschiedlichem Gehalt bezüglich der Polymerkomponenten aufwiesen. Damit zeigen diese Bereiche nach entsprechender Bestrahlung unterschiedliche Intensitäten. Auf den Träger wurde dann eine Reihe von PCR-Produkten (aceA, acs, amiB, ampG, argC, atpA, creB, icdA, napH, rpoA, rpoH, rpoS) durch Spotting (Firma BioRobotics Microgrid II) aufgebracht. Speziell aufgereinigte und mit Fluoreszenzfarbstoffen (Cy3 oder Cy5 der Firma Amersham) markierte spezifische cDNA wurde durch Hybridisierung an den PCR-Spots immobilisiert. Anschließend wurden die Proben mittels eines konfokalen Laserscanners (Affymetrix, Packard) ausgelesen und die Ergebnisse mittels einer speziellen Software (IconoClust der Firma Clondiag) analysiert. Dabei erfolgte die Bewertung der Ergebnisse unter Referenzierung auf die verschiedenen Intensitäten der unterschiedlichen Bereiche des Fluoreszenzeichstandards.

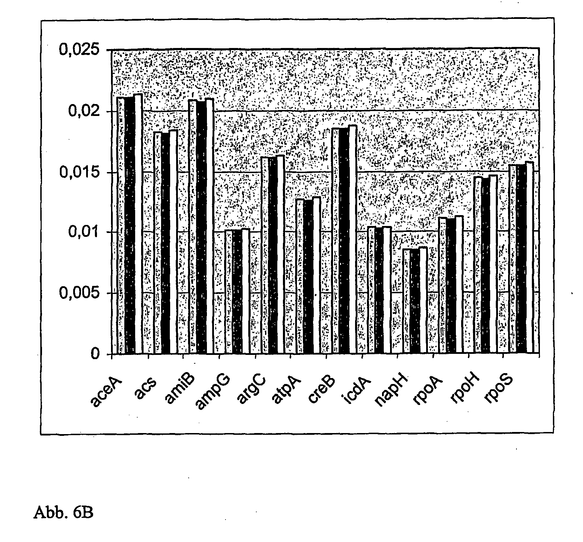

Die drei Balken einer cDNA stehen für die Referenzierung der Signaldaten der Hybridisierung auf drei verschiedene Bereiche des Standards, die unterschiedliche Intensitäten aufweisen. Dazu wurden die Ergebnisse auf die verschiedenen Intensitätsstufen normiert und unter Berücksichtigung des Gehalts der Polymerschichten auf eine Stufe gerechnet. Die Graphik (Abbildung 6B) zeigt, dass eine solche Rückrechnung zulässig ist, da für jede cDNA gleiche Ergebnisse erhalten werden, unabhängig davon, auf welchen Bereich die Messung der cDNA bezogen wird. Somit ist es bei bekanntem Gehalt der Polymerschichten zulässig, jeden Bereich zur Referenzierung zu verwenden, was die Universalität des Standards erhört. Die Messungen erfolgten mit einem konfokalen Biochip-Sanner Scanarray 4000 (Packard) bei 100% Laserleistung und 85% PMT-gain.

### Beschreibung der Abbildungen

Abb. 1
   Herstellung eines Fluoreszenzstandards der erfindungsgemäßen Vorrichtungen durch mehrstufige Photolithographie (Negativprozess).
Abb. 2A
   Fluoreszenzstandard der erfindungsgemäßen Vorrichtungen in Array-Form, mikrolithographisch hergestellt auf Borofloatglas.
Abb. 2B
   Fluoreszenzstandard der erfindungsgemäßen Vorrichtungen in Array-Form, hergestellt durch Spotten auf Borofloatglas.
Abb. 3
   Fluoreszenzeichstandard auf Objektträger.
Abb. 4A
   Veränderungen der resultierenden Luminiszenzintensitäten durch Einwirkung von Strahlung im sichtbaren Bereich (Bleichen oder Bleaching). Die Intensität ist als Grauwert angegeben.
Abb. 4B
   Änderung der Fluoreszenzintensität über die Anzahl der Messungen in einem Weißlicht/CCD System nach Durchführung eines angepassten Temperprotokolls. Die Intensität ist als Grauwert angegeben.
Abb. 4C
   Durch angepasste Temperprotokolle ist es möglich, das Bleichverhalten der polymeren Schichten so anzugleichen, dass Veränderungen der Fluoreszenzausbeute über die Anzahl durchgeführter Messungen keinen Einfluss auf die resultierenden Intensitätsverhältnisse hat. Die obere Linie gibt das d3/d2-Verhältnis, die untere Linie das d2/d1-Verhältnis aus Abbildung 4A an.
Abb. 5
   Messergebnisse eines Scans für verschiedene Farbstoffe. Die Intensität ist als Grauwert angegeben. Diese Standards sind geeignet zur Normierung von Ergebnissen in verschiedenen Wellenlängenbereichen.
Abb. 6A
   Inverser Scan eines gespotteten Sonden-Arrays. Im oberen Teil erkennt man den Fluoreszenzeichstandard (1). Darunter befindet sich der Sonden-Array (2). Es handelt sich um gespottete PCR-Produkte nach Hybridisierung mit Cy3/Cy5 markierter cDNA.
Abb. 6B
   Es wurden verschiedene PCR-Produkte gespottet und mit cDNA hybridisiert. Die Ergebnisse wurden auf die verschiedenen Intensitätsstufen von verschiedenen Bereichen normiert (jeweils die drei Balken) und unter Berücksichtigung des Gehalts der Stoffe in den Polymerschichten auf eine Stufe gerechnet. Die Grafik zeigt, dass eine solche Rückrechnung zulässig ist. Es ist also bei bekanntem Gehalt egal, welcher Bereich zur Normierung benutzt wird.

## Patentansprüche

1. Vorrichtung, umfassend einen im Wesentlichen nicht fluoreszierenden Träger, auf dem definierte Bereiche angeordnet sind, wobei diese definierten Bereiche mindestens eine fluoreszierende Polymerschicht aufweisen und sich mindestens zwei der fluoreszierenden Polymerschichten hinsichtlich ihrer Dicke und/oder Zusammensetzung unterscheiden, **dadurch gekennzeichnet dass** auf dem Träger ebenfalls Sondenmoleküle angeordnet sind.

2. Vorrichtung, umfassend einen im Wesentlichen nicht fluoreszierenden Träger, auf dem definierte Bereiche angeordnet sind, wobei diese definierten Bereiche mindestens eine fluoreszierende Polymerschicht aufweisen und sich mindestens zwei der fluoreszierenden Polymerschichten hinsichtlich ihrer Dicke und/oder Zusammensetzung unterscheiden, **dadurch gekennzeichnet, dass** der Träger mit einem im Wesentlichen nicht fluoreszierenden Trägersystem verbunden ist, auf dem Sondenmoleküle, Zellen, Gewebeschnitte, pharmazeutisch aktive Verbindungen und/oder Plasmide immobilisiert sind.

3. Vorrichtung nach Anspruch 1 oder 2,
**dadurch gekennzeichnet, dass** die Polymerschichten ein oder mehrere Polymere enthalten, wobei mindestens eines der Polymere nach entsprechender Bestrahlung fluoresziert.

4. Vorrichtung nach Anspruch 3,
**dadurch gekennzeichnet, dass** die Polymere Positiv- und/oder Negativ-Photolacke, insbesondere auf Basis von Epoxidharzen wie SU8 und/oder Novolacke und/oder PMMA und/oder photosensitives Polyimid und/oder Benzocyclobuten umfassen.

5. Vorrichtung nach einem der vorstehenden Ansprüche,
**dadurch gekennzeichnet, dass** die Polymerschichten neben mindestens einem Polymer zusätzlich fluoreszierende Stoffe enthalten.

6. Vorrichtung nach Anspruch 5,
**dadurch gekennzeichnet, dass** die fluoreszierenden Stoffe organische Farbstoffe, insbesondere Azofarbstoffe, Triphenylmethanfarbstoffe, Porphyninenfarbstoffe und/oder anorganische Farbstoffe, insbesondere metallische Farbstoffe und/oder Lanthanide und/oder Perylen-Derivate umfassen.

7. Vorrichtung nach einem der vorstehenden Ansprüche,
**dadurch gekennzeichnet, dass** die Vorrichtung ferner ein Detektionssystem zur Fluoreszenzmessung umfasst.

8. Vorrichtung nach Anspruch 7,
**dadurch gekennzeichnet, dass** die maximale Dicke der Polymerschichten in mindestens einem der Bereiche deutlich kleiner als die minimale Fokustiefe der zur Fluoreszenz-Messung verwendeten Detektionssysteme ist.

9. Vorrichtung nach einem der vorhergehenden Ansprüche,
**dadurch gekennzeichnet, dass** die maximale Dicke der Polymerschichten zwischen wenigen Nanometern und maximal 50 µm liegt, bevorzugt zwischen 100 nm und 10 µm, besonders bevorzugt zwischen 200 nm und 5 µm liegt.

10. Vorrichtung nach einem der vorstehenden Ansprüche,
**dadurch gekennzeichnet, dass** die definierten Bereiche sich in Form und/oder Größe unterscheiden.

11. Vorrichtung nach Anspruch 10,
**dadurch gekennzeichnet, dass** die definierten Bereiche die Form von Quadraten und/oder Rechtecken mit Seitenlängen zwischen einigen Nanometern und 5 mm, besonders bevorzugt zwischen 100 nm und 1 mm aufweisen.

12. Vorrichtung nach Anspruch 10,
**dadurch gekennzeichnet, dass** die definierten Bereiche die Form von Kreisen mit Durchmessern zwischen einigen Nanometern und 5 mm, besonders bevorzugt zwischen 100 nm und 1 mm aufweisen.

13. Vorrichtung nach einem der vorstehenden Ansprüche,
**dadurch gekennzeichnet, dass** die definierten Bereiche in Array-Form auf dem Träger aufgebracht sind.

14. Vorrichtung nach einem der vorstehenden Ansprüche,
**dadurch gekennzeichnet, dass** der Träger und/oder das Trägersystem aus Glas, metallisiertem Glas, Silizium, Metall und/oder Kunststoffe bestehen.

15. Vorrichtung nach Anspruch 14,
**dadurch gekennzeichnet, dass** der Träger und/oder das Trägersystem aus Quarzglas und/oder Borofloat-Glas und/oder Kunststoffen, bevorzugt aus PMMA und/oder Polycarbonat bestehen.

16. Vorrichtung nach Anspruch 15,
**dadurch gekennzeichnet, dass** es sich bei dem Trägersystem um einen Objektträger handelt.

17. Vorrichtung nach einem der vorstehenden Ansprüche,
**dadurch gekennzeichnet, dass** es sich bei dem Träger oder Trägersystem um einen Sonden-Array handelt, auf dem bevorzugt mindestens eine Substanzbibliothek immobilisiert ist.

18. Vorrichtung nach Anspruch 17,
**dadurch gekennzeichnet, dass** auf dem Sonden-Array Substanzbibliotheken in Form von Peptiden und/oder Proteinen, bevorzugt in Form von Antikörpern, Rezeptoren, Rezeptor-Ligand-Molekülen, Hormonen oder biologisch aktiven Peptiden immobilisiert sind.

19. Vorrichtung nach Anspruch 17,
**dadurch gekennzeichnet, dass** auf den Sonden-Array Substanzbibliotheken in Form von Nukleinsäuremolekülen, bevorzugt in Form von DNA-Molekülen und/oder RNA-Molekülen, besonders bevorzugt in Form von genomischer DNA, mRNA, cDNA und/oder rRNA immobilisiert sind.

20. Verfahren zur Herstellung einer Vorrichtung nach einem der Ansprüche 1 und 3 bis 19, umfassend einen im Wesentlichen nicht fluoreszierenden Träger mit definierten Bereichen, wobei auf diesen definierten Bereichen mindestens eine fluoreszierende Polymerschicht aufgebracht wird und sich mindestens zwei der fluoreszierenden Polymerschichten hinsichtlich ihrer Dicke und/oder Zusammensetzung unterscheiden, und wobei auf dem Träger Sondenmoleküle immobilisiert werden.

21. Verfahren zur Herstellung einer Vorrichtung nach einem der Ansprüche 2 bis 19, umfassend einen im Wesentlichen nicht fluoreszierenden Träger mit definierten Bereichen und ein mit dem Träger verbundenes im Wesentlichen nicht fluoreszierendes Trägersystem, wobei auf diesen Bereichen mindestens eine fluoreszierende Polymerschicht aufgebracht wird und sich mindestens zwei der fluoreszierenden Polymerschichten hinsichtlich ihrer Dicke und/oder Zusammensetzung unterscheiden, und wobei auf dem Trägersystem Sondenmoleküle, Zellen, Gewebeschnitte, pharmazeutisch aktive Verbindungen und/oder Plasmide immobilisiert werden.

22. Verfahren nach Anspruch 20 oder 21,
**dadurch gekennzeichnet, dass** die Intensität der in den Bereichen bei entsprechender Bestrahlung hervorgerufenen Fluoreszenz durch die Wahl der Schichtdicke und/oder der Zusammensetzung der Polymerschichten eingestellt wird.

23. Verfahren nach einem der Ansprüche 20 bis 22,
**dadurch gekennzeichnet, dass** die Intensität der in den Bereichen bei entsprechender Bestrahlung hervorgerufenen Fluoreszenz durch physikalische Behandlungsmethoden während der Herstellung, bevorzugt durch Bestrahlung und/oder Temperaturbehandlung eingestellt wird.

24. Verfahren nach einem der Ansprüche 20 bis 23,
**dadurch gekennzeichnet, dass** der Anregungswellenlängenbereich der Polymerschichten durch die Wahl der Polymere und/oder der zugegebenen fluoreszierenden Stoffe eingestellt wird.

25. Verfahren nach einem der Ansprüche 20 bis 24,
**dadurch gekennzeichnet, dass** das Bleichverhalten der in den Bereichen nach entsprechender längerer Bestrahlung hervorgerufenen Fluoreszenz durch die Wahl der Art und/oder Menge und/oder Zusammensetzung der Polymere und/oder durch die Wahl der Art und/oder Menge und/oder Zusammensetzung der zugegebenen fluoreszierenden Stoffe eingestellt wird.

26. Verfahren nach einem der Ansprüche 20 bis 25,
**dadurch gekennzeichnet, dass** das Bleichverhalten der in den Bereichen nach entsprechender längerer Bestrahlung hervorgerufenen Fluoreszenz durch physikalische Behandlungsmethoden während der Herstellung, bevorzugt durch Bestrahlung und/oder Temperaturbehandlung eingestellt wird.

27. Verfahren nach Anspruch 26,
**dadurch gekennzeichnet, dass** die Polymerschichten durch mikrotechnische Verfahren auf den Träger aufgebracht und/oder strukturiert werden.

28. Verfahren nach Anspruch 27,
**dadurch gekennzeichnet, dass** die mikrotechnischen Verfahren ausgewählt werden aus photolithographischen Verfahren, Trockenätzen und/oder Ionenimplantation.

29. Verfahren nach Anspruch 27 oder 28,
**dadurch gekennzeichnet, dass** die Polymerschichten durch positive oder negative photolithographische Verfahren auf den Träger aufgebracht und/oder strukturiert werden.

30. Verfahren nach einem der Ansprüche 27 bis 29,
**dadurch gekennzeichnet, dass** die Polymerschichten als homogene Schichten durch CVD-, PVD- und bevorzugt durch Spin-On-Verfahren auf den Träger aufgebracht werden.

31. Verfahren nach einem der Ansprüche 20 bis 26,
**dadurch gekennzeichnet, dass** die Polymerschichten durch drucktechnische Verfahren auf den Träger aufgebracht und/oder strukturiert werden.

32. Verfahren nach Anspruch 31,
**dadurch gekennzeichnet, dass** die drucktechnischen Verfahren ausgewählt werden aus Spotten, Offsetdruck, Walzen, Spritzgießen und/oder Oberflächenprägung.

33. Verfahren nach einem der Ansprüche 20 bis 32,
**dadurch gekennzeichnet, dass** die Dicke der Polymerschichten in Abhängigkeit von den Verfahrensparametern, besonders bevorzugt in Abhängigkeit von der Viskosität des Polymers, von der Temperatur, von der Luftfeuchtigkeit oder von der Umlaufgeschwindigkeit, bei photolithographischen Verfahren besonders bevorzugt in Abhängigkeit von der Bestrahlungs-Dosis, dem Entwicklungsprozess und dem Temperverfahren eingestellt werden kann.

34. Verfahren nach einem der Ansprüche 20 bis 33,
**dadurch gekennzeichnet, dass** die geometrische Form der bei entsprechender Bestrahlung fluoreszierenden Bereiche durch entsprechende Aussparungen in einer Maske, bevorzugt in einer Lochmaske auf Basis von strukturiertem Chrom auf Quarz definiert wird.

35. Verfahren nach einem der Ansprüche 20 bis 34,
**dadurch gekennzeichnet, dass** das Vemetzungsverhalten der Polymerschichten durch Temper- und/oder Bestrahlungsprotokolle einstellbar ist.

36. Verfahren nach einem der Ansprüche 20 bis 35,
**dadurch gekennzeichnet, dass** die Vorrichtung mit einem im Wesentlichen nicht fluoreszierenden, bevorzugt optisch durchlässigen Trägersystem durch Kleben, durch Lagejustage und/oder durch ein Vakuumsystem verbunden wird.

37. Verwendung einer Vorrichtung nach einem der Ansprüche 1 bis 19 zur Kalibrierung, bevorzugt zur on-line Kalibrierung von Fluoreszenzdetektionssystemen hinsichtlich ihrer Sensitivität, ihres räumlichen und/oder zeitlichen Auflösungsvermögens und/oder hinsichtlich ihrer geometrischen und/oder dynamischen und/oder alterungsbedingten Eigenschaften.

38. Verwendung nach Anspruch 37 zur Laserleistungsmessung und/oder -steuerung und/oder zur Lampenleistungsmessung und/oder zum Integrationszeitabgleich und/oder zur Auflösungsanpassung.

39. Verwendung nach Anspruch 37 zur Flatfieldbestimmung und/oder zur Linearisierung von CCD-Readersystemen.

40. Verwendung einer Vorrichtung nach einem der Ansprüche 1 bis 19 zur Referenzierung und/oder zum system- und geräteübergreifenden und/oder testübergreifenden Vergleich von Fluoreszenzsignalen, wobei es sich bevorzugt um Fluoreszenzsignale von Sonden-Array basierten Interaktionsstudien handelt.

41. Verwendung nach Anspruch 40 zum system- und/oder geräteübergreifenden Vergleich von Fluoreszenzsignalen durch Normierung der experimentellen Ergebnisse auf resultierende Intensitäten der Polymerschichten.

42. Verwendung nach Anspruch 40 zur Quantifizierung von Fluoreszenzsignalen durch Normierung der experimentellen Ergebnisse auf resultierende Intensitäten der Polymerschichten zur Definition absoluter Ergebnisse oder zur Definition relativer, auf die Fluoreszenz polymerer Schichten bezogener Ergebnisse.

43. Verwendung nach einem der Ansprüche 40 bis 42, wobei es sich um Fluoreszenzsignale von Protein-Protein-Interaktionsstudien, bevorzugt von Antikörper-Antigen- und/oder Rezeptor-Ligand-Interaktionsstudien, und/oder von Nukleinsäure-Nukleinsäure-Interaktionsstudien, besonders bevorzugt von DNA-RNA- und/oder DNA-DNA- und/oder RNA-RNA- Interaktionsstudien und/oder von Protein-Nukleinsäure-Interaktionsstudien handelt.

44. Verwendung einer Vorrichtung nach einem der Ansprüche 2 bis 19 zum system- und geräteübergreifenden und/oder testübergreifenden Vergleich von zellulären Lokalisationsexperimenten und Gewebeschnitten, die durch Fluoreszenz-Mikroskopie auswertbar sind.

## Claims

1. Device, comprising an essentially non-fluorescent support onto which defined regions are arranged, wherein these defined regions have at least one fluorescent polymeric layer and at least two of the fluorescent polymeric layers differ with respect to their thickness and/or composition, **characterized in that** probe molecules are also arranged on the support.

2. Device, comprising an essentially non-fluorescent support onto which defined regions are arranged, wherein these defined regions have at least one fluorescent polymeric layer and at least two of the fluorescent polymeric layers differ with respect to their thickness and/or composition, **characterized in that** the support is linked with an essentially non-fluorescent support system, onto which probe molecules, cells, tissue sections, pharmaceutically active compounds and/or plasmids are immobilized.

3. Device according to claims 1 or 2,
**characterized in that** the polymeric layers comprise one or more polymers, wherein at least one of the polymers fluoresces after corresponding irradiation.

4. Device according to claim 3,
**characterized in that** the polymers comprise positive photosensitive coatings and/or negative photosensitive coatings, in particular based on epoxy resins such as SU8 and/or novolak resins and/or PMMA and/or photosensitive polyimide and/or benzocyclobutene.

5. Device according to one of the preceding claims,
**characterized in that** the polymeric layers contain fluorescent substances in addition to the at least one polymer.

6. Device according to claim 5,
**characterized in that** the fluorescent substances comprise organic dyes, in particular azo dyes, triphenyl methan dyes, porphyrine dyes and/or inorganic dyes, in particular metallic dyes and/or lanthanides and/or perylene derivatives.

7. Device according to one of the preceding claims,
**characterized in that** the device further comprises a detection system for measuring fluorescence.

8. Device according to claim 7,
**characterized in that** the maximum thickness of the polymeric layers in at least one of the regions is significantly smaller than the minimal focal depth of the detection systems used for fluorescence measurement

9. Device according to one of the preceding claims,
**characterized in that** the maximum thickness of the polymeric layers is between a few nanometers and max. 50 µm, preferably between 100 nm and 10 µm, particularly preferably between 200 nm and 5 µm.

10. Device according to one of the preceding claims,
**characterized in that** the defined regions differ in shape and/or size.

11. Device according to claim 10,
**characterized in that** the defined regions are of square and/or rectangular shape with side lengths between some nanometers and 5 mm, particularly preferably between 100 nm and 1 mm.

12. Device according to claim 10,
**characterized in that** the defined regions are of circular shape having diameters between some nanometers and 5 mm, particularly preferably between 100 nm and 1 mm.

13. Device according to one of the preceding claims,
**characterized in that** the defined regions are applied in array form on the support.

14. Device according to one of the preceding claims,
**characterized in that** the support and/or the support system consists of glass, metalized glass, silicon, metal and/or plastics.

15. Device according to claim 14,
**characterized in that** the support and/or the support system consists of quartz glass and/or borofloat glass and/or plastics, particularly preferably PMMA and/or polycarbonate.

16. Device according to claim 15,
**characterized in that** the support system is a microscope slide.

17. Device according to one of the preceding claims,
**characterized in that** the support or support system is a probe array on which preferably at least one substance library is immobilized.

18. Device according to claim 17,
**characterized in that** substance libraries in the form of peptides and/or proteins, preferably in the form of antibodies, receptors, receptor-ligand molecules, hormones or biologically active peptides are immobilized on the probe array.

19. Device according to claim 17,
**characterized in that** substance libraries in the form of nucleic acid molecules, preferably in the form of DNA molecules and/or RNA molecules, particularly preferably in the form of genomic DNA, mRNA, cDNA and/or rRNA are immobilized on the probe array.

20. Method for the manufacture of a device according to one of claims 1 and 3 to 19, comprising an essentially non-fluorescent support with defined regions, wherein at least one fluorescent polymeric layer is applied to these defined regions and at least two of the fluorescent polymeric layers differ with respect to their thickness and/or composition, and wherein probe molecules are immobilized on the support.

21. Method for the manufacture of a device according to one of claims 2 to 19, comprising an essentially non-fluorescent support with defined regions and an essentially non-fluorescent support system linked to the support, wherein at least one fluorescent polymeric layer is applied to these regions and at least two of the fluorescent polymeric layers differ with respect to their thickness and/or composition, and wherein probe molecules, cells, tissue sections, pharmaceutically active compounds and/or plasmids are immobilized on the support system.

22. Method according to claims 20 or 21,
**characterized in that** the intensity of the fluorescence which occurs in the regions after corresponding irradiation is adjustable by selecting the thickness of the polymeric layer and/or the composition of the polymeric layers.

23. Method according to claims 20 to 22,
**characterized in that** the intensity of the fluorescence which occurs in the regions after corresponding irradiation is adjustable by physical treatment methods during the manufacturing process, preferably by irradiation and/or temperature treatment.

24. Method according to one of the claims 20 to 23,
**characterized in that** the excitation wavelength range of the polymeric layers is adjustable by selecting the polymers and/or the added fluorescent substances.

25. Method according to one of the claims 20 to 24,
**characterized in that** the bleaching behavior of the fluorescence, which occurs in the regions after corresponding irradiation over a longer period, is adjustable by selecting the kind and/or quantity and/or composition of the polymers and/or by selecting the kind and/or quantity and/or composition of the added fluorescent substances.

26. Method according to one of the claims 20 to 25,
**characterized in that** the bleaching behavior of the fluorescence, which occurs in the regions after corresponding irradiation over a longer period, is adjustable by physical treatment methods during the manufacturing process, preferably by irradiation and/or temperature treatment.

27. Method according to claim 26,
**characterized in that** the polymeric layers are applied to the support and/or structured by microtechnical methods.

28. Method according to claim 27,
**characterized in that** the microtechnical methods are selected from photolithographic methods, dry etching and/or ion implantation.

29. Method according to claims 27 or 28,
**characterized in that** the polymeric layers are applied to the support and/or structured by positive or negative photolithographic methods.

30. Method according to one of the claims 27 to 29,
**characterized in that** the polymeric layers are applied to the support as homogenic layers by CVD, PVD, and preferably by spin-on methods.

31. Method according to one of the claims 20 to 26,
**characterized in that** the polymeric layers are applied to the support and/or structured by print-technology methods.

32. Method according to claim 31,
**characterized in that** the print-technology methods are selected from spotting, offset printing, rolling, injection moulding and/or surface embossing.

33. Method according to one of the claims 20 to 32,
**characterized in that** the thickness of the polymeric layers can be set depending on the parameters of the method, particularly preferably depending on the viscosity of the polymer, the temperature, the atmospheric humidity or the circulation speed, in the case of photolithographic methods particularly preferably depending on the irradiation dose, the development process and the tempering process.

34. Method according to one of the claims 20 to 33,
**characterized in that** the geometric form of the regions which fluoresce after corresponding irradiation is determined by corresponding recesses in a mask, preferably in a pinhole on the basis of structured chromium on quartz.

35. Method according to one of the claims 20 to 34,
**characterized in that** the cross-linking behavior of the polymeric layers is adjustable by tempering and/or irradiation protocols.

36. Method according to one of the claims 20 to 35,
**characterized in that** the device is linked to an essentially non-fluorescent support system, preferably with optical transmittance, by way of adhesion, position adjustment and/or a vacuum system.

37. Use of a device according to one of claims 1 to 19 for calibration, preferably for online calibration of fluorescence detection systems with regard to their sensitivity, their spatial or temporal resolution and/or with regard to their geometric and/or dynamic characteristics and/or their characteristics caused by ageing.

38. Use of a device according to claim 37 for measuring and/or regulating laser power and/or for measuring lamp power and/or alignment of integration time and/or for resolution adaptation.

39. Use of a device according to claim 37 for flat field determination and/or linearization of CCD reader systems.

40. Use of a device according to one of claims 1 to 19 for standardization and/or cross-system and cross-device and/or cross-test comparison of fluorescent signals, wherein the fluorescent signals are preferably fluorescent signals of interaction studies on the basis of probe arrays.

41. Use of a device according to claim 40 for cross-system and/or cross-device comparison of fluorescent signals by standardizing the experimental results to resulting intensities of the polymeric layers.

42. Use of a device according to claim 40 for quantifying fluorescent signals by standardizing the experimental results to the resulting intensities of the polymeric layers for defining absolute results or for defining relative results based on the fluorescence of the polymeric layers.

43. Use of a device according to one of claims 40 to 42, wherein the fluorescent signals are from protein-protein-interaction studies, preferably from antibody-antigene and/or receptor-ligand interaction studies, and/or from nucleic acid-nucleic acid interaction studies, particularly preferably from DNA-RNA and/or DNA-DNA and/or RNA-RNA interaction studies and/or from protein-nucleic acid interaction studies.

44. Use of a device according to one of claims 2 to 19 for cross-system and cross-device and/or cross-test comparison of cellular localization experiments and tissue sections which are evaluable by fluorescence microscopy.

## Revendications

1. Dispositif, comprenant un support pour l'essentiel non fluorescent qui comporte des zones définies, ces zones définies présentant au moins une couche de polymère fluorescent et au moins deux des couches de polymère fluorescent se distinguant par leur épaisseur et/ou leur composition,
**caractérisé en ce que** des molécules de sonde sont également disposées sur le support.

2. Dispositif comprenant un support pour l'essentiel non fluorescent qui comporte des zones définies, ces zones définies présentant au moins une couche de polymère fluorescent et au moins deux des couches de polymère fluorescent se distinguant par leur épaisseur et/ou leur composition,
**caractérisé en ce que** le support est lié à un système de support pour l'essentiel non fluorescent, sur lequel sont immobilisées des molécules de sonde, des cellules, des coupes de tissu, des combinaisons pharmaceutiques actives et/ou des plasmides.

3. Dispositif selon la revendication 1 ou 2,
**caractérisé en ce que** les couches de polymère contiennent un ou plusieurs polymères, au moins un des polymères devenant fluorescent après irradiation correspondante.

4. Dispositif selon la revendication 3,
**caractérisé en ce que** les polymères comprennent des laques photosensibles positives et/ou négatives, reposant en particulier sur des résinées époxy telles SU8 et/ou des novolaques et/ou des PMMA et/ou des polyimides photosensibles et/ou des benzo cyclo butènes.

5. Dispositif selon l'une quelconque des revendications précédentes,
**caractérisé en ce que**, à côté d'au moins un polymère, les couches de polymère contiennent en outre des matériaux fluorescents.

6. Dispositif selon la revendication 5,
**caractérisé en ce que** les matériaux fluorescents comprennent des colorants organiques, en particulier des colorants azo, des colorants triphényle méthane, des colorants porfinine et/ou des colorants inorganiques, en particulier des colorants métalliques et ou des lantanides et/ou des dérivées du pérylène.

7. Dispositif selon l'une quelconque des revendications précédentes,
**caractérisé en ce que**, le dispositif comprend également un système de détection pour la mesure de la fluorescence.

8. Dispositif selon la revendication 7,
**caractérisé en ce que** l'épaisseur maximale des couches de polymère est, dans au moins l'une des zones, nettement inférieure à la profondeur de focalisation des systèmes de détection employés pour la mesure de fluorescence.

9. Dispositif selon l'une quelconque des revendications précédentes,
**caractérisé en ce que** l'épaisseur maximale des couches de polymère est de quelques nanomètres à 50 µm au plus, de préférence de 100 nm à 10 µm, de préférence toute particulière de 200 nm à 5 µm.

10. Dispositif selon l'une quelconque des revendications précédentes,
**caractérisé en ce que** les zones définies se distinguent par la forme et/ou la taille.

11. Dispositif selon la revendication 10,
**caractérisé en ce que** les zones définies ont la forme de carrés et/ou de rectangles, avec des longueurs de côtés comprises entre plusieurs nanomètres et 5 mm, de préférence toute particulière entre 100 nm et 1 mm.

12. Dispositif selon la revendication 10,
**caractérisé en ce que** les zones définies ont la forme de cercles d'un diamètre compris entre plusieurs nanomètres et 5 mm, de préférence toute particulière entre 100 nm et 1 mm.

13. Dispositif selon l'une quelconque des revendications précédentes,
**caractérisé en ce que** les zones définies sont déposées sur le support sous forme de réseau.

14. Dispositif selon l'une quelconque des revendications précédentes,
**caractérisé en ce que** le support et/ou le système de support se constitue de verre, de verre métallisé, de silicium, de métal et/ou de matière synthétique.

15. Dispositif selon la revendication 14,
**caractérisé en ce que** le support et/ou le système de support se constitue de verre de quartz et/ou de verre Borofloat et/ou de matières synthétiques, de préférence de PMMA et/ou de polycarbonate.

16. Dispositif selon la revendication 15,
**caractérisé en ce que**, dans le cas du système de support, il s'agit d'un porte-objet.

17. Dispositif selon l'une quelconque des revendications précédentes,
**caractérisé en ce que**, dans le cas du support ou du système de support, il s'agit d'un réseau de sondes sur lequel, de préférence, au moins une bibliothèque de substances est immobilisée.

18. Dispositif selon la revendication 17,
**caractérisé en ce que**, sur le réseau de sondes des bibliothèques de substances sont immobilisés sous la forme de peptides et/ou de protéines, de préférence sous la forme d'anticorps, de récepteurs, de molécules ligand récepteur, de hormones ou de peptides biologiquement actifs.

19. Dispositif selon la revendication 17,
**caractérisé en ce que**, sur le réseau de sondes des bibliothèques de substances sont immobilisés sous la forme de molécules d'acide nucléique, de préférence sous la forme de molécules d'ADN et/ou de molécules d'ARN, de préférence toute particulière sous la forme de molécules d'ADN, de l'ARNm, de l'ADNc et/ou de l'ARNr génomiques.

20. Procédé de fabrication d'un dispositif selon l'une des revendications 1 et 3 à 19, comprenant un support pour l'essentiel non fluorescent qui comporte des zones définies, au moins une couche de polymère fluorescent étant déposée sur ces zones définies et au moins deux des couches de polymère fluorescent se distinguant par leur épaisseur et/ou composition et des molécules de sonde étant immobilisées sur le support.

21. Procédé de fabrication d'un dispositif selon l'une quelconque des revendications 2 à 19, comprenant un support pour l'essentiel non fluorescent qui comporte des zones définies et un système de support pour l'essentiel non fluorescent relié au support, au moins une couche de polymère fluorescent étant déposée sur ces zones et au moins deux des couches de polymère fluorescent se distinguant par leur épaisseur et/ou composition et des molécules de sonde, des cellules, des coupes de tissu, des combinaisons pharmaceutiques actives et/ou des plasmides étant immobilisés sur le système de support.

22. Procédé selon la revendication 20 ou 21,
**caractérisé en ce que** l'intensité de la fluorescence déclenchée par irradiation correspondante dans les zones est ajustée par le choix de l'épaisseur de couche et/ou la composition des couches de polymère.

23. Procédé selon l'une quelconque des revendications 20 à 22,
**caractérisé en ce que** l'intensité de la fluorescence déclenchée par irradiation correspondante dans les zones est ajustée par des méthodes de traitement physique pendant la fabrication, de préférence par irradiation et/ou par traitement thermique.

24. Procédé selon l'une quelconque des revendications 20 à 23,
**caractérisé en ce que** la plage de longueurs d'onde d'excitation des couches de polymère est ajustée par le choix des polymères et/ou des matériaux fluorescents apportés.

25. Procédé selon l'une quelconque des revendications 20 à 24,
**caractérisé en ce que** le comportement de blanchiment de la fluorescence déclenchée par irradiation de durée supérieure correspondante est ajusté par le choix du type et/ou de la quantité et/ou de la composition des polymères et/ou le choix du type et/ou de la quantité et/ou de la composition des matériaux fluorescents apportés.

26. Procédé selon l'une quelconque des revendications 20 à 25,
**caractérisé en ce que** le comportement de blanchiment de la fluorescence déclenchée par irradiation de durée supérieure correspondante est ajusté par des méthodes de traitement physique pendant la fabrication, de préférence par irradiation et/ou par traitement thermique.

27. Procédé selon la revendication 26,
**caractérisé en ce que** les couches de polymère sont déposées et/ou structurées sur le support par des procédés microtechniques.

28. Procédé selon la revendication 27,
**caractérisé en ce que** les procédés microtechniques sont choisis parmi les procédés photolithographiques, la gravure sèche et/ou l'implantation ionique.

29. Procédé selon la revendication 27 ou 28,
**caractérisé en ce que** les couches de polymère sont déposées et/ou structurées sur le support par procédés photolithographiques positifs ou négatifs.

30. Procédé selon l'une quelconque des revendications 27 à 29,
**caractérisé en ce que** les couches de polymère sont déposées sur le support en tant que couches homogènes par procédé CVD, PVD et, de préférence, Spin-on.

31. Procédé selon l'une quelconque des revendications 20 à 26,
**caractérisé en ce que** les couches de polymère sont déposées et/ou structurées sur le support par procédés d'impression.

32. Procédé selon la revendication 31,
**caractérisé en ce que** les procédés d'impression sont choisis parmi les procédés spot, offset, laminage, moulage par injection et/ou gravure en surface.

33. Procédé selon l'une quelconque des revendications 20 à 32,
**caractérisé en ce que** l'épaisseur des couches de polymère peut être ajustée en fonction des paramètres du procédé, de préférence toute particulière en fonction de la viscosité du polymère, de la température, de l'humidité atmosphérique ou de la vitesse de circulation, dans le cas de procédés photolithographiques, de préférence toute particulière en fonction de la dose d'irradiation, du processus de développement et du procédé de trempe.

34. Procédé selon l'une quelconque des revendications 20 à 33,
**caractérisé en ce que** la forme géométrique des zones fluorescentes sous irradiation correspondante est définie par des perçages correspondants dans un masque, de préférence dans un masque percé sur la base de chrome structuré sur quartz.

35. Procédé selon l'une quelconque des revendications 20 à 34,
**caractérisé en ce que** le comportement à la réticulation des couches de polymère peut être ajusté par des protocoles de trempe et/ou d'irradiation.

36. Procédé selon l'une quelconque des revendications 20 à 35,
**caractérisé en ce que** le dispositif est relié à un système de support pour l'essentiel non fluorescent, de préférence optiquement transparent, par collage, ajustage de position et/ou un système par vide.

37. Utilisation d'un dispositif selon l'une quelconque des revendications 1 à 19 pour étalonner, de préférence étalonner en ligne, des systèmes de détection de fluorescence sur le plan de leur sensibilité, de leur capacité de résolution spatiale et/ou temporelle et/ou sur le plan de leurs propriétés géométriques et/ou dynamiques et/ou conditionnées par le vieillissement.

38. Utilisation selon la revendication 37 pour la mesure et/ou la commande de puissance de laser et/ou la mesure de puissance de lampe et/ou la compensation de durées d'intégration et/ou l'adaptation de résolution.

39. Utilisation selon la revendication 37 pour la détermination d'un flat field et/ou la linéarisation de systèmes de lecture CCD.

40. Utilisation d'un dispositif selon l'une quelconque des revendications 1 à 19 pour le référencement et/ou la comparaison au niveau système et appareil et/ou au niveau test de signaux de fluorescence, s'agissant, de préférence, de signaux de fluorescence d'études d'interaction basées sur réseau de sondes.

41. Utilisation selon la revendication 40 pour la comparaison au niveau système et appareil de signaux de fluorescence par normalisation des résultats expérimentaux selon des intensités résultantes des couches de polymère.

42. Utilisation selon la revendication 40 pour la quantification de signaux de fluorescence par normalisation des résultats expérimentaux selon des intensités résultantes des couches de polymère pour la définition de résultats absolus ou pour la définition de résultats relatifs se rapportant à la fluorescence de couches de polymères.

43. Utilisation d'un dispositif selon l'une quelconque des revendications 40 à 42, dans laquelle il s'agit de signaux de fluorescence de préférence d'études d'interaction protéines protéines, de préférence d'études d'interaction anticorps - antigènes et/ou d'études d'interaction récepteurs - ligands et/ou d'études d'interaction acides nucléiques - acides nucléiques, de préférence tout particulière d'études d'interaction ADN - ARN, ADN - ADN et/ou ARN - ARN et/ou d'études d'interaction protéines - acides nucléiques.

44. Utilisation d'un dispositif selon l'une quelconque des revendications 2 à 19 pour la comparaison au niveau système et appareil et/ou au niveau test d'expériences de localisation cellulaire et de coupes de tissu qui sont exploitables par microscopie à fluorescence.
